# EUROPEAN PATENT APPLICATION

(11) **EP 4 750 184 A2**
(43) Date of publication of application: **27.05.2026**
(21) Application number: 26160443.3
(22) Date of filing: 05.09.2018
(51) Int. Cl.: H04W 72/02

(54) **IDENTIFICATION-BASED CHANNEL SELECTION**

(30) Priority: 06.09.2017 US 201762554764 P; 05.01.2018 US 201862614259 P; 04.09.2018 US 201816121118
(62) Divisional of application: 18786076.2
(71) Applicant: QUALCOMM Incorporated, San Diego, CA 92121-1714 (US)
(72) Inventor: YUCEK, Tevfik, San Diego, CA 92121-1714 (US); JONES IV, Vincent Knowles, San Diego, CA 92121-1714 (US); DE VEGT, Rolf, San Diego, CA 92121-1714 (US)
(74) Representative: Bardehle Pagenberg Partnerschaft mbB Patentanwälte Rechtsanwälte

(57) **Abstract**

A method and an apparatus for unlicensed wireless communication in a frequency band that supports both licensed and unlicensed wireless communication is described. The method comprising transmitting a request to a database system, the request including identification information associated with a wireless communication device, receiving a response from the database system, the response including information identifying one or more frequency channels in the frequency band, selecting a frequency channel for use by the wireless communication device based on the identified frequency channels and transmitting a communication to the wireless communication device identifying the selected frequency channel.

## Description

### PRIORITY INFORMATION

This application claims the benefit of priority to: United States Patent Application Serial No. 16/121,118 (Attorney Docket No. 175140) entitled "Identification-Based Channel Selection" and filed 4 September 2018; to United States Provisional Patent Application Serial No. 62/614,259 (Attorney Docket No. 175140P2) entitled "Identifier-Based Channel Selection" and filed 5 January 2018; and to United States Provisional Patent Application Serial No. 62/554,764 (Attorney Docket No. 175140P1) entitled "Location-Based Channel Selection" and filed 6 September 2017.

### TECHNICAL FIELD

This disclosure relates generally to wireless communications, and more specifically, to determining one or more frequency channels for use in wireless communications.

### DESCRIPTION OF THE RELATED TECHNOLOGY

A wireless local area network (WLAN) may be formed by one or more access points (APs) that provide a shared wireless communication medium for use by a number of client devices also referred to as stations (STAs). The basic building block of a WLAN conforming to the 802.11 family of standards is a Basic Service Set (BSS), which is managed by an AP. Each BSS is identified by a service set identifier (SSID) that is advertised by the AP. An AP periodically broadcasts beacon frames to enable any STAs within wireless range of the AP to establish and/or maintain a communication link with the WLAN. In a typical WLAN, each STA may be associated with only one AP at a time. To identify an AP with which to associate, a STA is configured to perform scans on the wireless channels of each of one or more frequency bands (for example, the 2.4 GHz band and/or the 5 GHz band). As a result of the increasing ubiquity of wireless networks, a STA may have the opportunity to select one of many WLANs within range of the STA and/or select among multiple APs that together form an extended BSS.

One emerging frequency band of interest for unlicensed wireless communications is the 6 GHz band, which, by some definitions, may extend from about 5925 MHz to about 7250 MHz. However, various incumbent wireless systems already operate in this frequency band. Such existing wireless links include, for example, point-to-point microwave links, big dish antennas, safety systems, TV stations, and satellite earth stations, among other incumbent systems.

### SUMMARY

This disclosure provides systems, devices, apparatus and methods, including computer programs encoded on storage media, for determining one or more frequency channels for use in wireless communication. Some implementations more specifically relate to determining one or more frequency channels for unlicensed wireless communication in a frequency band also used for licensed wireless communication, such as a 6 GHz frequency band. In one aspect, a database system is configured to store information associated with existing wireless systems or links including the locations of such systems as well as characteristics of the wireless signals they transmit. In another aspect, a wireless communication device is configured to determine its location, transmit its location (a "geographic identification") in a request to the database system, and receive information from the database system usable to determine a frequency channel on which to communicate. In another aspect, a wireless communication device is configured to transmit a request including a unique identifier (ID) (a "device identification") to a database system and receive information from the database system usable to determine a frequency channel on which to communicate. In some implementations, the described techniques can be used to manage unlicensed wireless communications in a frequency band shared with licensed communications from various existing incumbent wireless systems (also referred to herein as existing wireless links). The described techniques can more particularly enable unlicensed wireless communications in a shared spectrum without interfering with licensed communications by existing incumbent wireless systems.

### BRIEF DESCRIPTION OF THE DRAWINGS

Figure 1 shows a block diagram of an example wireless communication system.
Figure 2A shows an example frame usable for communications between an access point (AP) and a number of stations (STAs).
Figure 2B shows another example frame usable for communications between an AP and a number of STAs.
Figure 3 shows a block diagram of an example AP for use in wireless communications.
Figure 4 shows a block diagram of an example STA for use in wireless communications.
Figure 5 shows a block diagram of an example wireless communication device according to some implementations.
Figure 6 shows a block diagram of an example database system according to some implementations.
Figure 7 shows a block diagram of an example network controller according to some implementations.
Figure 8 shows a flowchart illustrating an example process for selecting a frequency channel for use in wireless communications according to some implementations.
Figure 9 shows a flowchart illustrating an example process for identifying one or more frequency channels for use in wireless communications based on identification information according to some implementations.
Figure 10 shows a flowchart illustrating an example process for selecting and identifying one or more frequency channels for use in wireless communications based on identification information according to some implementations.
Figure 11 shows a flowchart illustrating an example process for selecting a frequency channel for use in wireless communications according to some implementations.
Figure 12 shows a flowchart illustrating an example process for identifying one or more frequency channels for use in wireless communications based on location information according to some implementations.
Figure 13 shows a flowchart illustrating an example process for selecting and identifying one or more frequency channels for use in wireless communications based on location information according to some implementations.
Figure 14 shows a flowchart illustrating an example process for selecting a frequency channel for use in wireless communications according to some implementations.
Figure 15 shows a flowchart illustrating an example process for identifying one or more frequency channels for use in wireless communications based on device identification information according to some implementations.
Figure 16 shows a flowchart illustrating an example process for selecting and identifying one or more frequency channels for use in wireless communications based on device identification information according to some implementations.

Like reference numbers and designations in the various drawings indicate like elements.

### DETAILED DESCRIPTION

The following description is directed to certain implementations for the purposes of describing innovative aspects of this disclosure. However, a person having ordinary skill in the art will readily recognize that the teachings herein can be applied in a multitude of different ways. The described implementations can be implemented in any device, system or network that is capable of transmitting and receiving radio frequency (RF) signals according to any of the IEEE 802.11 standards, or the Bluetooth^{®} standards. The described implementations also can be implemented in any device, system or network that is capable of transmitting and receiving RF signals according to any of the following technologies or techniques: code division multiple access (CDMA), frequency division multiple access (FDMA), orthogonal frequency division multiple access (OFDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), AMPS, or other known signals that are used to communicate within a wireless, cellular or internet of things (IOT) network, such as a system utilizing 3G, 4G or 5G, or further implementations thereof, technology.

Various implementations relate generally to determining one or more frequency channels for use in wireless communication. Some implementations more specifically relate to determining one or more frequency channels for unlicensed wireless communication in a frequency band also used for licensed wireless communication, such as a 6 GHz frequency band. In one aspect, a database system is configured to store information associated with existing wireless systems or links including the locations of such systems as well as characteristics of the wireless signals they transmit. In another aspect, a wireless communication device is configured to determine its location, transmit its location (a "geographic identification") in a request to the database system, and receive information from the database system usable to determine a frequency channel on which to communicate. In another aspect, a wireless communication device is configured to transmit a request including a unique identifier (ID) (a "device identification") to a database system and receive information from the database system usable to determine a frequency channel on which to communicate. In some implementations, the described techniques can be used to manage unlicensed wireless communications in a frequency band shared with licensed communications from various existing incumbent wireless systems (also referred to herein as existing wireless links). The described techniques can more particularly enable unlicensed wireless communications in a shared spectrum without interfering with licensed communications by existing incumbent wireless systems.

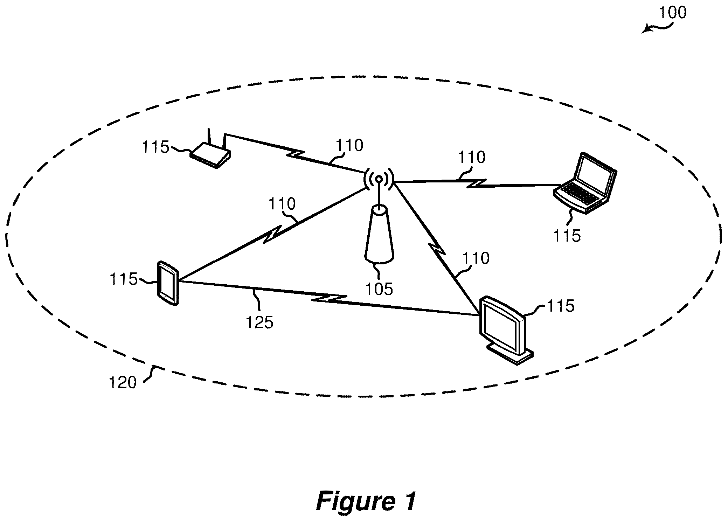

Figure 1 shows a block diagram of an example wireless communication system 100. According to some aspects, the wireless communication system 100 can be an example of a wireless local area network (WLAN) (and will hereinafter be referred to as WLAN 100). For example, the WLAN 100 can be a network implementing at least one of the IEEE 802.11 family of standards. The WLAN 100 may include numerous wireless communication devices such as an access point (AP) 105 and multiple associated stations (STAs) 115. Each of the STAs 115 also may be referred to as a mobile station (MS), a mobile device, a mobile handset, a wireless handset, an access terminal (AT), a user equipment (UE), a subscriber station (SS), or a subscriber unit, among other possibilities. The STAs 115 may represent various devices such as mobile phones, personal digital assistant (PDAs), other handheld devices, netbooks, notebook computers, tablet computers, laptops, display devices (for example, TVs, computer monitors, navigation systems, among others), printers, key fobs (for example, for passive keyless entry and start (PKES) systems), among other possibilities.

Each of the STAs 115 may associate and communicate with the AP 105 via a communication link 110. The various STAs 115 in the network are able to communicate with one another through the AP 105. A single AP 105 and an associated set of STAs 115 may be referred to as a basic service set (BSS). Figure 1 additionally shows an example coverage area 120 of the AP 105, which may represent a basic service area (BSA) of the WLAN 100. While only one AP 105 is shown, the WLAN network 100 can include multiple APs 105. An extended service set (ESS) may include a set of connected BSSs. An extended network station associated with the WLAN 100 may be connected to a wired or wireless distribution system that may allow multiple APs 105 to be connected in such an ESS. As such, a STA 115 can be covered by more than one AP 105 and can associate with different APs 105 at different times for different transmissions.

STAs 115 may function and communicate (via the respective communication links 110) according to the IEEE 802.11 family of standards and amendments including, but not limited to, 802.11a, 802.11b, 802.11g, 802.11n, 802.11ac, 802.11ad, 802.11ah, 802.11ay, 802.11ax, 802.11az, and 802.11ba. These standards define the WLAN radio and baseband protocols for the PHY and medium access control (MAC) layers. The wireless devices in the WLAN 100 may communicate over an unlicensed spectrum, which may be a portion of spectrum that includes frequency bands traditionally used by Wi-Fi technology, such as the 2.4 GHz band, the 5 GHz band, the 60 GHz band, the 3.6 GHz band, and the 900 MHz band. Some implementations of the wireless devices described herein also may communicate in other frequency bands, such as the emerging 6 GHz band, which may support both licensed and unlicensed communications. The wireless devices in the WLAN 100 also can be configured to communicate over other frequency bands such as shared licensed frequency bands, where multiple operators may have a license to operate in the same or overlapping frequency band or bands.

In some cases, STAs 115 may form networks without APs 105 or other equipment other than the STAs 115 themselves. One example of such a network is an ad hoc network (or wireless ad hoc network). Ad hoc networks may alternatively be referred to as mesh networks or peer-to-peer (P2P) connections. In some cases, ad hoc networks may be implemented within a larger wireless network such as the WLAN 100. In such implementations, while the STAs 115 may be capable of communicating with each other through the AP 105 using communication links 110, STAs 115 also can communicate directly with each other via direct wireless communication links 125. Additionally, two STAs 115 may communicate via a direct communication link 125 regardless of whether both STAs 115 are associated with and served by the same AP 105. In such an ad hoc system, one or more of the STAs 115 may assume the role filled by the AP 105 in a BSS. Such a STA 115 may be referred to as a group owner (GO) and may coordinate transmissions within the ad hoc network. Examples of direct wireless communication links 125 include Wi-Fi Direct connections, connections established by using a Wi-Fi Tunneled Direct Link Setup (TDLS) link, and other peer-to-peer (P2P) group connections.

Some types of STAs 115 may provide for automated communication. Automated wireless devices may include those implementing internet-of-things (IoT) communication, Machine-to-Machine (M2M) communication, or machine type communication (MTC). IoT, M2M or MTC may refer to data communication technologies that allow devices to communicate without human intervention. For example, IoT, M2M or MTC may refer to communications from STAs 115 that integrate sensors or meters to measure or capture information and relay that information to a central server or application program that can make use of the information or present the information to humans interacting with the program or application.

Some of STAs 115 may be MTC devices, such as MTC devices designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging. An MTC device may operate using half-duplex (one-way) communications at a reduced peak rate. MTC devices may also be configured to enter a power saving "deep sleep" mode when not engaging in active communications.

WLAN 100 may support beamformed transmissions. As an example, AP 105 may use multiple antennas or antenna arrays to conduct beamforming operations for directional communications with a STA 115. Beamforming (which may also be referred to as spatial filtering or directional transmission) is a signal processing technique that may be used at a transmitter (e.g., AP 105) to shape and/or steer an overall antenna beam in the direction of a target receiver (e.g., a STA 115). Beamforming may be achieved by combining elements in an antenna array in such a way that transmitted signals at particular angles experience constructive interference while others experience destructive interference. In some cases, the ways in which the elements of the antenna array are combined at the transmitter may depend on channel state information (CSI) associated with the channels over which the AP 105 may communicate with the STA 115. That is, based on this CSI, the AP 105 may appropriately weight the transmissions from each antenna (e.g., or antenna port) such that the desired beamforming effects are achieved. In some cases, these weights may be determined before beamforming can be employed. For example, the transmitter (e.g., the AP 105) may transmit one or more sounding packets to the receiver in order to determine CSI.

WLAN 100 may further support multiple-input, multiple-output (MIMO) wireless systems. Such systems may use a transmission scheme between a transmitter (e.g., AP 105) and a receiver (e.g., a STA 115), where both transmitter and receiver are equipped with multiple antennas. For example, AP 105 may have an antenna array with a number of rows and columns of antenna ports that the AP 105 may use for beamforming in its communication with a STA 115. Signals may be transmitted multiple times in different directions (e.g., each transmission may be beamformed differently). The receiver (e.g., STA 115) may try multiple beams (e.g., antenna subarrays) while receiving the signals.

WLAN PDUs may be transmitted over a radio frequency spectrum band, which in some examples may include multiple sub-bands or frequency channels. In some cases, the radio frequency spectrum band may have a bandwidth of 80 MHz, and each of the sub-bands or channels may have a bandwidth of 20 MHz. Transmissions to and from STAs 115 and APs 105 typically include control information within a header that is transmitted prior to data transmissions. The information provided in a header is used by a receiving device to decode the subsequent data. A legacy WLAN preamble may include legacy short training field (STF) (L-STF) information, legacy LTF (L-LTF) information, and legacy signaling (L-SIG) information. The legacy preamble may be used for packet detection, automatic gain control and channel estimation, among other uses. The legacy preamble may also be used to maintain compatibility with legacy devices.

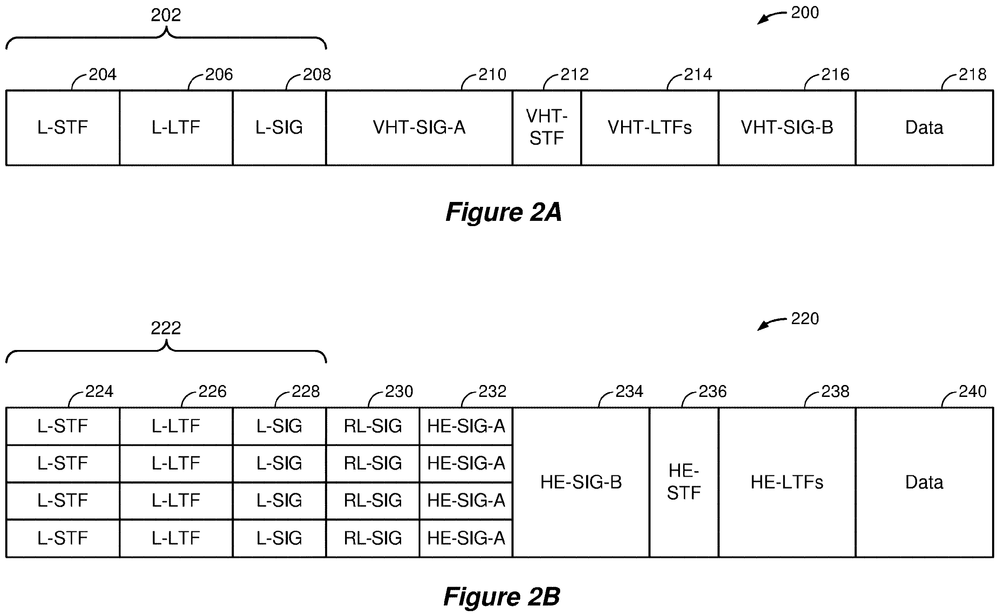

Figure 2A shows an example frame 200 usable for communications between an AP and each of a number of stations identified by the AP. For example, the frame 200 can be formatted as a very high throughput (VHT) frame in accordance with the IEEE 802.11ac amendment to the IEEE 802.11 set of standards. The frame 200 includes a legacy preamble portion 202 that includes a legacy short training field (L-STF) 204, a legacy long training field (L-LTF) 206, and a legacy signaling field (L-SIG) 208. The frame 200 further includes a non-legacy preamble portion that includes a first very high throughput (VHT) signaling field (VHT-SIG-A) 210, a VHT short training field (VHT-STF) 212, a number of VHT long training fields (VHT-LTFs) 214 and a second VHT signaling field (VHT-SIG-B) 216. The frame 200 also can include a payload or data portion 218 after the preamble. The data portion 218 can include medium access control (MAC) protocol data units (MPDUs), for example, in the form of an aggregated MPDU (AMPDU).

The frame 200 may be transmitted over a radio frequency spectrum band, which may include a plurality of sub-bands. For example, the radio frequency spectrum band may have a bandwidth of 80 MHz, and each of the sub-bands may have a bandwidth of 20 MHz. When the radio frequency spectrum band includes a plurality of sub-bands, the L-STF, L-LTF, and L-SIG fields 204, 206 and 208, respectively, may be duplicated and transmitted in each of the plurality of sub-bands. The information in the VHT-SIG-A field 210 is also duplicated and transmitted in each sub-band.

The VHT-SIG-A field 210 may indicate to a station that the frame 200 is an IEEE 802.11ac frame. The VHT-SIG-A field 210 also may include VHT WLAN signaling information usable by stations other than the number of stations that are identified to receive downlink communications in the frame 200. The VHT-SIG-A field 210 also includes information usable by the identified number of stations to decode the VHT-SIG-B field 216. The VHT-SIG-B field 216 may include VHT WLAN signaling information usable by the number of stations identified to receive downlink communications in the frame 200. More specifically, the VHT-SIG-B field 216 may include information usable by the number of stations to decode data received in the data portion 218. The VHT-SIG-B field 216 may be encoded separately from the VHT-SIG-A field 210. The number of VHT-LTFs 214 depends on the number of transmitted streams.

Figure 2B shows an example frame 220 usable for communications between an AP and each of a number of stations identified by the AP. For example, the frame 220 can be formatted as a high efficiency (HE) frame in accordance with the IEEE 802.11ax amendment to the IEEE 802.11 set of standards. The frame 220 includes a legacy preamble portion 222 that includes a legacy short training field (L-STF) 224, a legacy long training field (L-LTF) 226, and a legacy signaling field (L-SIG) 228. The frame 220 further includes a non-legacy preamble portion that includes a repeated legacy signaling field (RL-SIG) 230, a first high efficiency signaling field (HE-SIG-A) 232, a second high efficiency signaling field (HE-SIG-B) 234, a high efficiency short training field (HE-STF) 236 and a number of high efficiency long training fields (HE-LTFs) 238. The frame 220 also can include a payload or data portion 240 after the preamble. The data portion 240 can include medium access control (MAC) protocol data units (MPDUs), for example, in the form of an aggregated MPDU (AMPDU).

The frame 220 may be transmitted over a radio frequency spectrum band, which may include a plurality of sub-bands. For example, the radio frequency spectrum band may have a bandwidth of 80 MHz, and each of the sub-bands may have a bandwidth of 20 MHz. When the radio frequency spectrum band includes a plurality of sub-bands, the L-STF, L-LTF, and L-SIG fields 224, 226 and 228, respectively, may be duplicated and transmitted in each of the plurality of sub-bands. The information in the RL-SIG field 230 and the HE-SIG-A field 232 is also duplicated and transmitted in each sub-band as shown in Figure 2B.

The RL-SIG field 230 may indicate to a station that the frame 220 is an IEEE 802.11ax frame. The HE-SIG-A field 232 may include high efficiency WLAN signaling information usable by stations other than the number of stations that are identified to receive downlink communications in the frame 220. The HE-SIG-A field 232 may also include information usable by the identified number of stations to decode the HE-SIG-B field 234. The HE-SIG-B field 234 may include high efficiency WLAN signaling information usable by the number of stations identified to receive downlink communications in the frame 220. More specifically, the HE-SIG-B field 234 may include information usable by the number of stations to decode data received in the data portion 240. The HE-SIG-B field 234 may be encoded separately from the HE-SIG-A field 232.

High efficiency (HE) WLAN (HEW) preambles can be used to schedule multiple devices, such as STAs 115, for multi-user simultaneous transmissions (for example, using multi-user orthogonal frequency division multiple access (MU-OFDMA) or multi-user multiple-input, multiple-output (MU-MIMO) techniques). A HEW signaling field may be used to signal a resource allocation pattern to multiple receiving STAs 115. The HEW signaling field can include a common user field that is decodable by multiple STAs 115, as well as a resource allocation field. The resource allocation field can indicate resource unit distributions to multiple STAs 115 and indicate which resource units in a resource unit distribution correspond to MU-MIMO transmissions and which resource units correspond to OFDMA transmissions. The HEW signaling field also can include, subsequent to the common user field, dedicated station-specific signaling fields that are assigned to particular STAs 115 and used to schedule resources and to indicate the scheduling to other WLAN devices.

In some cases, aspects of transmissions may vary based on a distance between a transmitter (for example, AP 105) and a receiver (for example, STA 115). WLAN 100 may otherwise generally benefit from AP 105 having information regarding the location of the various STAs 115 within coverage area 120. In some examples, relevant distances may be computed using RTT-based ranging procedures. As an example, WLAN 100 may offer such functionality that produces accuracy on the order of one meter (or even centimeter-level accuracy). The same (or similar) techniques employed in WLAN 100 may be applied across other radio access technologies (RATs). For example, such RTT-based ranging functionality may be employed in developing "relative geofencing" applications (i.e., applications where there is a geofence relative to an object of interest such as a mobile device, a car, a person, etc.). Various such examples are considered in accordance with aspects of the present disclosure. For example, car keys may employ RTT estimation for PKES systems. RTT-based geofences around an adult may monitor the position of a child within the geofence. Additionally, drone-to-drone and car-to-car RTT functionality may help prevent collisions.

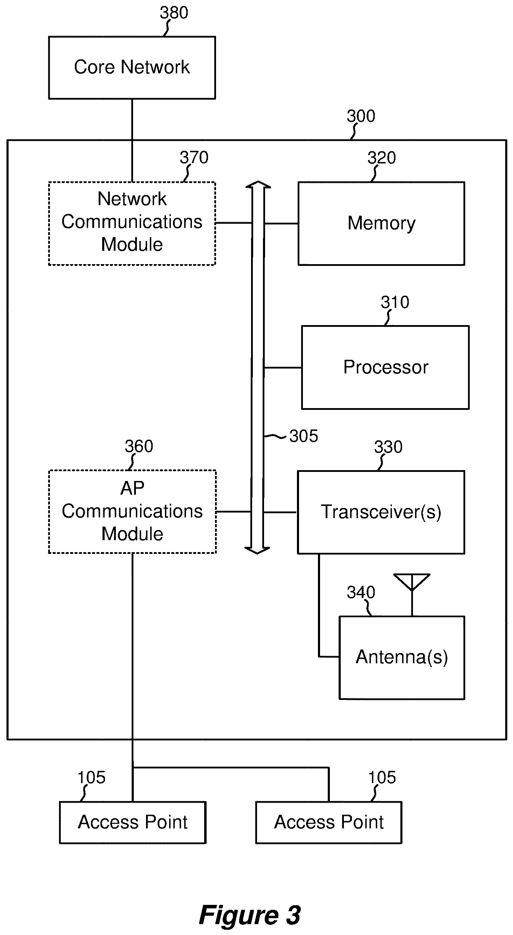

Figure 3 shows a block diagram of an example access point (AP) 300 for use in wireless communication. For example, the AP 300 may be an example of aspects of the AP 105 described with reference to Figure 1. The AP 400 can be configured to send and receive WLAN frames (also referred to herein as transmissions or communications) conforming to an IEEE 802.11 standard (such as the 802.11ac or 802.11ax amendments to the 802.11 family of standards), as well as to encode and decode such frames. The AP 300 includes a processor 310, a memory 320, at least one transceiver 330 and at least one antenna 340. In some implementations, the AP 300 also includes one or both of an AP communications module 360 and a network communications module 370. Each of the components (or "modules") described with reference to Figure 3 can communicate with one another, directly or indirectly, over at least one bus 305.

The memory 320 can include random access memory (RAM) and read-only memory (ROM). The memory 320 also can store processor- or computer-executable software (SW) code 325 containing instructions that, when executed by the processor 310, cause the processor to perform various functions described herein for wireless communication, including generation and transmission of a downlink frame and reception of an uplink frame.

The processor 310 can include an intelligent hardware device such as, for example, a central processing unit (CPU), a microcontroller, an application-specific integrated circuit (ASIC), or a programmable logic device (PLD) such as a field programmable gate array (FPGA), among other possibilities. The processor 310 processes information received through the transceiver 330, the AP communications module 360, and the network communications module 370. The processor 310 also can process information to be sent to the transceiver 330 for transmission through the antenna 340, information to be sent to the AP communications module 360, and information to be sent to the network communications module 370. The processor 310 can generally be configured to perform various operations related to generating and transmitting a downlink frame and receiving an uplink frame.

The transceiver 330 can include a modem to modulate packets and provide the modulated packets to the antenna 340 for transmission, as well as to demodulate packets received from the antenna 340. The transceiver 330 can be implemented as at least one radio frequency (RF) transmitter and at least one separate RF receiver. The transceiver 330 can communicate bi-directionally, via the antenna 340, with at least one station 115 as, for example, shown in Figure 1. Although only one transceiver 330 and one antenna 340 are shown in Figure 3, the AP 300 can typically include multiple transceivers 330 and antennas 340. For example, in some AP implementations, the AP 300 can include multiple transmit antennas (each with a corresponding transmit chain) and multiple receive antennas (each with a corresponding receive chain). The AP 300 may communicate with a core network 380 through the network communications module 370. The system also may communicate with other APs, such as APs 105, using the AP communications module 360.

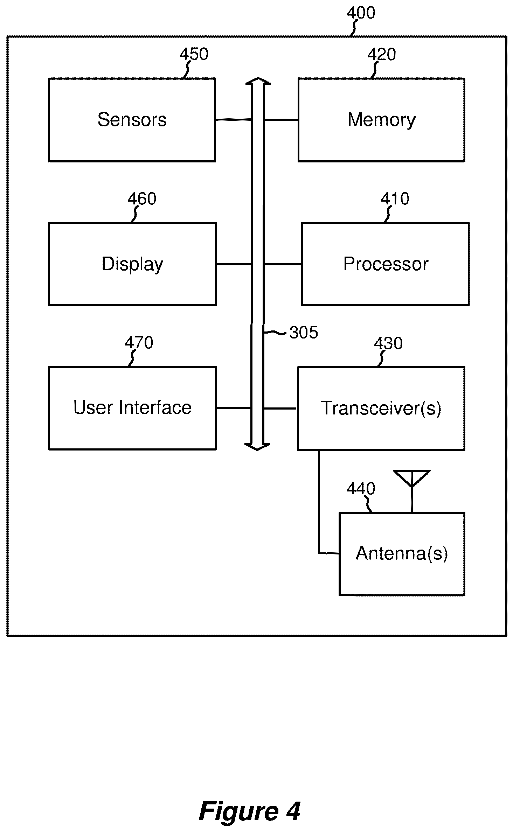

Figure 4 shows a block diagram of an example wireless station (STA) 400 for use in wireless communication. For example, the STA 400 may be an example of aspects of the STA 115 described with reference to Figure 1. The STA 400 can be configured to send and receive WLAN frames (also referred to herein as transmissions or communications) conforming to an IEEE 802.11 standard (such as the 802.11ac or 802.11ax amendments to the 802.11 family of standards), as well as to encode and decode such frames. The STA 400 includes a processor 410, a memory 420, at least one transceiver 430 and at least one antenna 440. In some implementations, the STA 400 additionally includes one or more of sensors 450, a display 460 and a user interface (UI) 470 (such as a touchscreen or keypad). Each of the components (or "modules") described with reference to Figure 4 can communicate with one another, directly or indirectly, over at least one bus 405.

The memory 420 can include RAM and ROM. The memory 420 also can store processor- or computer-executable SW code 425 containing instructions that, when executed, cause the processor 410 to perform various functions described herein for wireless communication, including reception of a downlink frame and generation and transmission of an uplink frame.

The processor 410 includes an intelligent hardware device such as, for example, a CPU, a microcontroller, an ASIC or a PLD such as an FPGA, among other possibilities. The processor 410 processes information received through the transceiver 430 as well as information to be sent to the transceiver 430 for transmission through the antenna 440. The processor 410 can be configured to perform various operations related to receiving a downlink frame and generating and transmitting an uplink frame.

The transceiver 430 can include a modem to modulate packets and provide the modulated packets to the antenna 440 for transmission, as well as to demodulate packets received from the antenna 440. The transceiver 430 can be implemented as at least one RF transmitter and at least one separate RF receiver. The transceiver 430 can communicate bi-directionally, via the antenna 440, with at least one AP 115 as, for example, shown in Figure 1. Although only one transceiver 430 and one antenna 440 are shown in Figure 4, the STA 400 can include two or more antennas. For example, in some STA implementations, the STA 400 can include multiple transmit antennas (each with a corresponding transmit chain) and multiple receive antennas (each with a corresponding receive chain).

As described above, various implementations relate generally to determining one or more frequency channels for use in wireless communication. Some implementations more specifically relate to determining one or more frequency channels for unlicensed wireless communication in a frequency band also used for licensed wireless communication, such as a 6 GHz frequency band. Some such implementations may provide for automated frequency coordination (AFC). In one aspect, a database system is configured to store information associated with existing wireless systems or links including the locations of such systems as well as characteristics of the wireless signals they transmit. In another aspect, a wireless communication device is configured to determine its location, transmit its location (geographic identification) in a request to the database system, and receive information from the database system usable to determine a frequency channel on which to communicate. In another aspect, a wireless communication device is configured to transmit a request including a unique identifier (ID) (device identification) to a database system and receive information from the database system usable to determine a frequency channel on which to communicate. In some implementations, the described techniques can be used to manage unlicensed wireless communications in a frequency band shared with licensed communications from various existing incumbent wireless systems (also referred to herein as existing wireless links). The described techniques can more particularly enable unlicensed wireless communications in a shared spectrum without interfering with licensed communications by existing incumbent wireless systems.

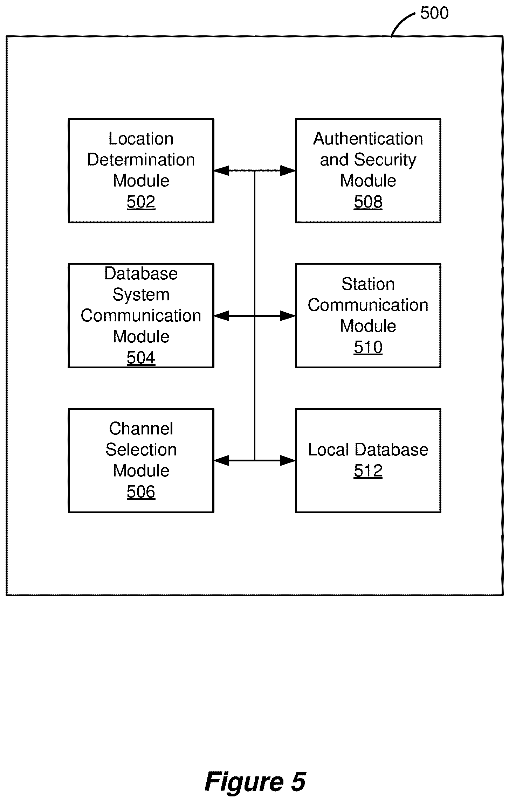

Figure 5 shows a block diagram of an example wireless communication device 500 according to some implementations. In some implementations, the wireless communication device 500 can be an example of the APs 105 and 300 described above with respect to Figures 1 and 3, respectively. In some other implementations, the wireless communication device 500 can be an example of the STAs 115 and 400 described above with respect to Figures 1 and 4, respectively (for example, in implementations in which such STAs are operable to function as "soft APs," "virtual APs" or "mobile hotspots" to provide network access to other STAs). In some implementations, the wireless communication device 500 includes a location determination module 502, a database communication module 504, a channel selection module 506, an authentication and security module 508, a station communication module 510 and a local database 512.

In some implementations, each of the modules 502, 504, 506, 508 and 510 are implemented at least in part as software stored in a memory (such as the memory 320 or memory 420). For example, each of the modules 502, 504, 506, 508 and 510 can be implemented as non-transitory instructions (or "code") executable by a processor (such as the processor 310 or processor 410). For example, the processor can execute the location determination module 502 to determine a location of the wireless communication device 500. In implementations in which the wireless communication device 500 includes geolocation capabilities, the location determination module 502 can determine the location of the wireless communication device 500 using such geolocation capabilities. For example, in implementations in which the wireless communication device 500 is configured to receive satellite navigation system (SNS) signals, such as Global Positioning System (GPS) signals, the location determination module 502 can determine the location of the wireless communication device 500 based on coordinates or other information extracted from such signals. However, in some implementations in which the wireless communication device 500 is a hard AP (for example, APs 105 and 300 described with reference to Figures 1 and 3, respectively), or in which the wireless communication device 500 is a mobile STA and geolocation capabilities are unavailable (such as in indoor environments or particular outdoor locations where SNS or other location signals are blocked or otherwise not available), the wireless communication device 500 may not include or have use of its own geolocation capabilities and thus the location determination module 502 may be unable to determine location without location information received from other devices.

In some implementations, the wireless communication device 500 can utilize another wireless communication device to obtain location information. For example, the location determination module 502 can be configured to generate a request for location information and cause the transmitter to transmit the request to a second wireless communication device in communication with the wireless communication device 500. For example, the second wireless communication device can be a STA such as STAs 105 and 400 described with reference to Figures 1 and 4, respectively. In such implementations, the STA can determine its own location using SNS signals, cellular tower triangulation or other geolocation techniques, and subsequently respond to the request with a response that includes the location of the second wireless communication device or other location information usable by the location determine module 502 to determine an approximate location of the wireless communication device 500. In some such implementations, the request for location information sent to the associated second wireless communication device can be transmitted in a conventionally used frequency band such as the 2.4 GHz or 5 GHz frequency bands.

In some implementations in which the wireless communication device 500 is a soft AP (for example, a STA such as STAs 105 or 400) with its own geolocation capabilities, the location determination module 502 can determine its own location using SNS signals, cellular tower triangulation or other geolocation techniques. However, as initially described above, geolocation capabilities may be unavailable in indoor environments or particular external locations where SNS or other location signals are blocked or otherwise not available.

In some implementations, the location determination module 502 is configured to determine the location of the wireless communication device 500 on a periodic basis. Additionally or alternatively, the location determination module 502 can be configured to determine the location upon being initialized by the processor, for example, responsive to the wireless communication device 500 being powered on. Additionally or alternatively, the location determination module 502 can be configured to determine the location responsive to the execution of an application running on the processor.

The processor can execute the database system communication module 504 to manage wired or wireless communications with an external database system. For example, the database system communication module 504 can be configured to generate requests to be transmitted to the external database system, and to receive responses from the external database system. In some implementations, the database system communication module 504 is configured to generate a request to identify one or more frequency channels for use in wireless communication, and to cause the transmitter to transmit the request to the external database system (for example, via one or more wired or wireless networks such as a wired or cellular backhaul). In some implementations, the request includes a geographic identification or other location information indicating the location of the wireless communication device 500 as determined or approximated by the location determination module 502.

Additionally or alternatively, such as when geolocation capabilities are unavailable, the request can include device identification information associated with the wireless communication device 500. In some such implementations, the device identification information includes a unique ID associated with the wireless communication device 500 such as, for example, a Federal Communications Commission (FCC) ID, MAC address or some other reference, identification or information that may uniquely identify the wireless communication device.

In some implementations, the request can additionally include one or more of: a transmission power capability of the transmitter of the wireless communication device 500, a spectral mask associated with transmissions from the transmitter of the wireless communication device 500, capabilities for performing preamble puncturing (a feature in 802.11ax), or other information that may be useful to the external database system in identifying one or more frequency channels for use by the wireless communication device 500 as described in more detail below.

In some implementations, the database system communication module 504 is configured to generate the request for the external database system on a periodic basis (for example, every minute, hourly, daily, weekly, monthly or at another suitable frequency). Additionally or alternatively, the database system communication module 504 can be configured to generate the request for the external database system upon being initialized by the processor, for example, responsive to the wireless communication device 500 being powered on or in response to the execution of an application running on the processor. Additionally or alternatively, the database system communication module 504 can be configured to generate the request for the external database system responsive to determining that its location has changed beyond a threshold distance in any direction or in a specific direction. Additionally or alternatively, the database system communication module 504 can be configured to generate the request for the external database system responsive to determining that geolocation capabilities are no longer available. It should also be appreciated that the database system communication module 504 may be configured to transmit location information or its unique ID to the external database system on a periodic or other basis without explicitly requesting frequency channels on which it is permitted or not permitted to operate.

The database system communication module 504 also is configured to receive responses from the external database system to the requests. For example, the database system communication module 504 can be configured to receive a response from the external database system that includes information identifying one or more frequency channels. In some implementations, the identified frequency channels are in a frequency band that supports both licensed and unlicensed wireless communication such as, for example, the 6 GHz band. In some implementations, the identified frequency channels are channels on which existing wireless systems in a geographic vicinity of the wireless communication device 500 do not operate (or are not operating at a particular time).

In some implementations, the response received from the external database system identifies a single selected frequency channel only, or a single set of selected frequency channels (for example, a set of adjacent channels) that the wireless communication device 500 can bond together for larger bandwidth communications. In some other implementations, the response received from the external database system can identify multiple frequency channels, a range of multiple frequency channels, or multiple sets of multiple (for example, adjacent) frequency channels. In such other implementations, the channel selection module 506 can select one of the multiple frequency channels identified in the response.

In some implementations, the response received from the external database system further includes a maximum transmission power for the wireless communication device 500 to use when transmitting communications on each of the one or more identified frequency channels. Additionally or alternatively, in some implementations, the response received from the external database system further includes timing information usable by the wireless communication device 500 (and in particular the channel selection module 506) to identify a time interval or duration during which one or more of the frequency channels identified in the response are available for use in wireless communications by the wireless communication device.

Additionally or alternatively, in some implementations, the response received from the external database system can further include information associated with one or more existing wireless links. For example, the response can include information identifying one or more existing wireless links operating on one or more of the frequency channels identified in the response. In some such implementations, the response can further include location information associated with (for example, geographic locations of) one or more of the existing wireless links (or the locations of the existing wireless links within a geographic boundary or "tile" around the wireless communication device 500, such as a 10 km by 10 km or other suitable area). The response also can include other information associated with wireless transmissions from the existing wireless links including various characteristics of such transmissions, for example, and information related to the antennas associated with the existing wireless links (for example, transmission power information, the transmission directions, antenna models, antenna heights, antenna tilts, antenna polarizations, beam widths, antenna gains, among other antenna information).

In some other implementations, the response received from the external database system does not identify a list of suitable frequency channels from which the wireless communication device 500 is to select. In such implementations, the response received from the external database system can include information associated with one or more existing wireless links such as the locations and transmission characteristics as described above. In such implementations, it is left to the channel selection module 506 to select a suitable frequency channel and a corresponding transmission power, among other parameters, based on the information associated with the existing wireless links identified in the response.

The processor can execute the channel selection module 506 to select one of the frequency channels identified in the response from the external database system. For example, the channel selection module 506 can designate the selected frequency channel as a primary channel on which beacons, probe requests, probe responses and other communications are to be transmitted. In this manner, the wireless communication device 500 can build a WLAN enabling unlicensed communications with associated STAs in a frequency band that supports both licensed and unlicensed wireless communications such as, for example, the 6 GHz band. Also in this way, the wireless communication device 500 (for example, functioning as an AP) serves as a master device capable of accessing the external database system and selecting a frequency channel for wireless communication, while the STAs that have associated with the wireless communication device 500 in another frequency band, or which will associate with the wireless communication device 500 in the desired frequency band (for example, 6 GHz band), may be considered slave devices.

As described above, in some implementations, the response received from the external database system designates one particular frequency channel that the wireless communication device 500 is to use for wireless communications in the frequency band. In some such implementations, the channel selection module 506 is configured to select the designated channel identified in the response from the external database system. Additionally, in implementations in which the response further includes a maximum transmission power for the wireless communication device 500 to use when transmitting communications on the designated frequency channel, the wireless communication device 500 can be configured to transmit communications on the selected channel at a power level less than or equal to the maximum transmission power identified in the response.

In implementations in which the channel selection module 506 selects a frequency channel from multiple frequency channels identified in the response from the external database system, the channel selection module 506 can base the selection on various rules. For example, in some implementations in which the response further includes a maximum transmission power for the wireless communication device 500 to use when transmitting communications on one or more of the multiple identified frequency channels, the channel selection module 506 can be configured to select a frequency channel from the multiple frequency channels identified in the response based on power considerations including the transmission power capabilities of the transmitter of the wireless communication device 500. For example, the channel selection module 506 can select a channel having a highest maximum power transmission value.

Additionally or alternatively, in some implementations in which the response further includes spectral mask requirements for transmissions from the wireless communication device 500, the channel selection module 506 can be configured to select a frequency channel from the multiple frequency channels identified in the response based on a spectral mask associated with transmissions from the transmitter of the wireless communication device 500.

Additionally or alternatively, in some implementations in which the response further includes timing information usable by the channel selection module 506 to identify a time interval or duration during which one or more of the frequency channels identified in the response are available for use in wireless communications, the channel selection module 506 can be configured to select a frequency channel from the multiple frequency channels identified in the response based on temporal considerations. For example, the channel selection module 506 can select a channel having at least a minimum available time duration or a channel that is available at a particular time such as a current time.

Additionally or alternatively, in some implementations in which the response further includes one or more other parameters or parameter ranges for the wireless communication device 500 to use when transmitting communications on one or more of the multiple identified frequency channels, the channel selection module 506 can be configured to select a frequency channel from the multiple frequency channels identified in the response based on the identified parameters. For example, the channel selection module 506 can select a channel associated with desirable parameters.

As described above, in some implementations, the frequency channels identified in the response are channels on which existing wireless systems in a geographic vicinity of the wireless communication device 500 do not operate (as determined by the external database system). However, in some implementations, the response received from the external database system can further include information associated with one or more existing wireless links. The channel selection module 506 can be configured to select a frequency channel from the multiple frequency channels identified in the response based on the information associated with the one or more existing wireless links. For example, the channel selection module 506 can select a channel on which there are no identified existing wireless links. In implementations in which the response includes location information associated with (for example, geographic locations of) the one or more existing wireless links, the channel selection module 506 can be configured to select a channel on which existing wireless links in a geographic vicinity of the wireless communication device 500 do not operate (or are not operating at a particular time).

Additionally or alternatively, in some implementations in which the response further includes transmission power information associated with the one or more existing wireless links, the channel selection module 506 can be configured to select a frequency channel from the multiple frequency channels identified in the response based on transmission power information associated with the one or more existing wireless links, or transmission directions associated with the one or more existing wireless links. For example, the channel selection module 506 can select a channel on which it determines that potential interference from existing wireless links is suitable (for example, below a threshold value). Similarly, the channel selection module 506 can select a channel on which it determines that potential interference to existing wireless links is suitable (for example, below a threshold value).

In some other implementations in which the response received from the external database system does not identify a list of suitable frequency channels from which the wireless communication device 500 is to select, the channel selection module 506 can select a frequency channel based on information associated with one or more existing wireless links such as the locations and transmission characteristics of such existing wireless links as described above. In such implementations, the channel selection module 506 selects a suitable frequency channel and a corresponding transmission power, among other parameters, based on the information associated with the existing wireless links identified in the response.

In some implementations, the database system communication module 504 can be configured to communicate the frequency channel selected by the channel selection module 506 to the external database system. In this manner, the database system can be informed of and track which frequency channels are being used by the wireless communication device 500 and similar devices. This may, for example, enable the database system to monitor potential interference in the spectrum of interest to ensure that existing wireless links are not too adversely affected as well as potentially to limit or otherwise coordinate the traffic on particular frequency channels via which the wireless communication device are permitted to operate.

The processor can execute the authentication and security module 508 to manage authentication with the external database system and to enable secure communication of data to and from the external database system.

The processor can execute the station communication module 510 to manage wireless communications with one or more STAs. For example, the station communication module 510 can be configured to identify STAs to receive communications, to generate beacons, probe responses, and other communications including MPDUs or AMPDUs to be transmitted to the identified STAs, and to cause the transmitter to transmit the communications, including in some instances SU- or MU-MIMO or SU- or MU-OFDMA communications, to the designated STAs. The station communication module 510 also can be configured to receive communications from STAs through the receiver and to process the received communications.

The local database 512 may be stored with each of the modules 502, 504, 506, 508 and 510 in a memory (such as the memory 320). In some other implementations, the local database 512 is stored in or implemented by another memory or memory device logically or physically separate from the memory used to store each of the modules 502, 504, 506, 508 and 510. In some implementations, the local database 512 stores profile information for various other wireless communication devices. For example, the station communication module 510 also can be configured to store profile information for each STA it is associated with, as well as STAs is has previously been associated with, in the local database 512. The profile information can include for each associated or previously associated STA, for example, the STA's MAC address, IP address, supported data rates, channel state information (CSI), RSSI values, a number of capabilities, a connection history with the wireless communication device 500, and any other suitable information.

The local database 512 also can store identifications of various existing wireless links, such as point-to-point microwave links and fixed satellite uplinks, among other incumbent systems, identified to the wireless communication device 500 in responses from the external database system. In various implementations, the local database 512 stores the locations of such existing wireless links (for example, in the form of longitudinal and latitudinal coordinates). In some implementations, the local database 512 is further configured to store other information relating to characteristics of the transmissions over such existing wireless links, for example, such as transmission power information associated with existing wireless links, or the transmission directions associated with existing wireless links. Additionally or alternatively, the local database 512 can store identifications of the blacklisted frequency channels the wireless communication device 500 is not permitted to use.

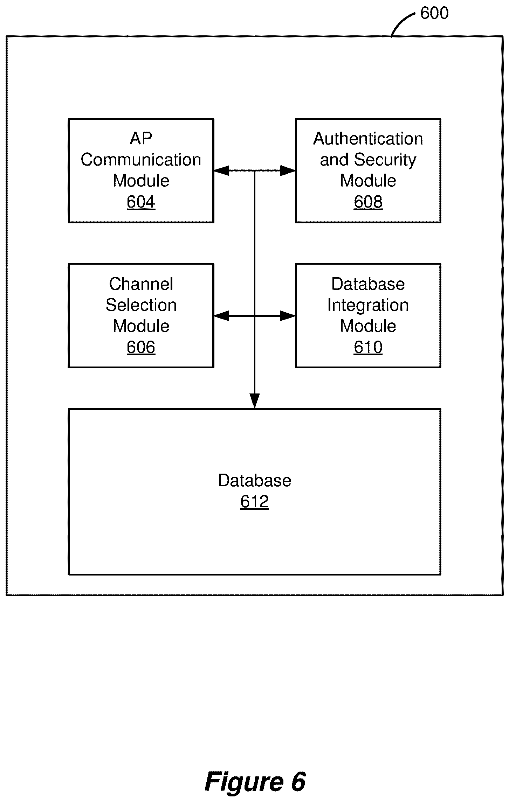

Figure 6 shows a block diagram of an example database system 600 according to some implementations. In some implementations, the database system 600 can be an external database system operated by a database provider such as, for example, a device manufacturer or service provider. In some implementations, the database system 600 includes an AP communication module 604, a channel selection module 606, an authentication and security module 608, a database integration module 610 and a database 612.

In some implementations, each of the modules 604, 606, 608 and 610 are implemented at least in part as software stored in a memory of the database system 600. For example, each of the modules 604, 606, 608 and 610 can be implemented as non-transitory instructions (or "code") executable by a processor (or multiple processors that may be operating in parallel). For example, one or more processors of the database system 600 can execute the AP communication module 604 to manage wired or wireless communications with APs such as, for example, the AP 105, the AP 300 or the wireless communication device 500 described with reference to Figures 1, 3 and 5, respectively (the operations and functions of the database system 600 will hereinafter be described for didactic purposes with reference to the wireless communication device 500). For example, the AP communication module 604 can be configured to receive requests from external APs and to generate responses to be transmitted to the APs.

In some implementations, the AP communication module 604 is configured to receive a request from the wireless communication device 500 to identify one or more frequency channels for use in wireless communication. In some implementations, the request includes the geographic location of the wireless communication device 500, or otherwise includes location information that can be usable by the AP communication module 604 in determining a location of the wireless communication device 500.

In some other implementations or instances, the request may not include a geographic location of the wireless communication device 500, such as when the wireless communication device does not possess geolocation capabilities or when geolocation capabilities are otherwise unavailable (for example, in indoor environments or particular external locations where SNS or other location signals are blocked or otherwise not available). In some such implementations, the request includes identification information associated with the wireless communication device 500. In some such implementations, the identification information includes a unique ID associated with the wireless communication device 500 such as, for example, a FCC ID, MAC address or some other reference, identification or information that may uniquely identify the wireless communication device.

In some implementations, the request can additionally include one or more of: a transmission power capability of the wireless communication device 500, a spectral mask associated with transmissions from the wireless communication device 500, capabilities for performing preamble puncturing, or other information that may be useful to the database system 600 (and particularly the channel selection module 606) in identifying one or more frequency channels for use by the wireless communication device 500 as described in more detail below.

The AP communication module 604 also is configured to generate responses to requests from external APs, such as the wireless communication device 500, and to cause the responses to be transmitted to the APs (for example, via one or more wired or wireless networks). For example, the AP communication module 604 can be configured to generate a response that includes information identifying one or more frequency channels determined by the database system 600 (and particularly the channel selection module 606) to be suitable for use in wireless communications by the wireless communication device 500. In some implementations, the frequency channels identified in the response are in a frequency band that supports both licensed and unlicensed wireless communication such as, for example, the 6 GHz band. In some implementations, the frequency channels identified in the response are channels on which the database system 600 has determined that existing wireless systems in a geographic vicinity of the wireless communication device 500 do not operate (or are not operating at a particular time).

In some implementations, the AP communication module 604 generates a response that identifies a single selected frequency channel only, or a single set of selected frequency channels (for example, a set of adjacent channels) that the wireless communication device 500 can bond together for larger bandwidth communications. In some other implementations, the AP communication module 604 generates a response that identifies multiple frequency channels, a range of multiple frequency channels, or multiple sets of multiple (for example, adjacent) frequency channels that the wireless communication device 500 can select from as described above. In some other implementations, the AP communication module 604 generates a response that instead identifies one or more blacklisted frequency channels the wireless communication device 500 is not permitted to use.

In some implementations, the AP communication module 604 generates the response to further include a maximum transmission power for the wireless communication device 500 to use when transmitting communications on one or more of the identified frequency channels. Additionally or alternatively, in some implementations, the AP communication module 604 generates the response to further include timing information usable by the wireless communication device 500 to identify a time interval or duration during which one or more of the frequency channels identified in the response are available for use in wireless communications by the wireless communication device 500.

In some implementations, the AP communication module 604 generates the response to further include information associated with one or more existing wireless links. For example, the response can include information identifying one or more existing wireless links operating on one or more of the frequency channels identified in the response. In some such implementations, the response can further include location information associated with (for example, geographic locations of) one or more of the existing wireless links (or the locations of the existing wireless links within a geographic boundary or "tile" around the wireless communication device 500). The response also can include other information associated with wireless transmissions from the existing wireless links including various characteristics of such transmissions, for example, and information related to the antennas associated with the existing wireless links (for example, transmission power information, the transmission directions, antenna models, antenna heights, antenna tilts, antenna polarizations, beam widths, antenna gains, among other antenna information).

In some other implementations, the AP communication module 604 generates a response that does not identify a list of suitable frequency channels from which the wireless communication device 500 is to select. In such implementations, the response generated by the AP communication module 604 can include information associated with one or more existing wireless links such as the locations and transmission characteristics as described above. In such implementations, it is left to the channel selection module 506 to select a suitable frequency channel and a corresponding transmission power, among other parameters, based on the information associated with the existing wireless links identified in the response.

One or more processors of the database system 600 can execute the channel selection module 606 to select one or more frequency channels to identity in the response. In some implementations, the channel selection module 606 may provide for automated frequency coordination (ACF), for example, in the 6 GHz frequency band. In various implementations, the channel selection module 606 selects the frequency channels to identify in the response based on the geographic location of the wireless communication device 500 as determined from the location information received in the request from the wireless communication device 500. Additionally or alternatively, the channel selection module 606 can select the frequency channels to identify in the response based on a unique ID associated with the wireless communication device 500 as determined from the identification information received in the request from the wireless communication device. For example, the channel selection module 606 may query the database 612 with the unique ID to identify those blacklisted frequency channels the wireless communication device 500 is not permitted to use, and identify only non-blacklisted frequency channels in the response. For example, the channel selection module 606 can select one or more of the non-blacklisted frequency channels to transmit in the response to the wireless communication device for use or selection by the wireless communication device.

In some implementations, the channel selection module 606 selects a single frequency channel that the wireless communication device 500 is to use for wireless communications in the frequency band. In some other implementations, the channel selection module 606 can select multiple frequency channels to identify in the response and leave it to the wireless communication device 500 to select a particular one of the frequency channels identified in the response as described above. The channel selection module 606 can base the selection of which frequency channels to identify in the response based on various rules. However, as described above, in some other implementations the channel selection module 606 can instead select and identify only the blacklisted frequency channels in the response.

As described above, in some implementations, the channel selection module 606 selects only those channels on which existing wireless systems in a geographic vicinity of the wireless communication device 500 do not operate (or are not currently operating) to include in the response. The channel selection module 606 can be configured to determine such channels based on the location of the wireless communication device 500 (as determined from the location information included in the request) as well as on the locations of existing wireless links. The locations of such existing wireless links, as well as information relating to characteristics of the transmissions over such existing wireless links, can be stored in and retrieved from the database 612 by the channel selection module 606. In some implementations, the locations of some moving existing wireless links, such as orbiting satellite links, can be tracked by the database system 600 and used by the channel selection module 606 to identify currently available frequency channels (in such implementations the response can include timing information indicating times or time intervals during which the respective channels are available for use).

In some implementations, the channel selection module 606 can be configured to select multiple frequency channels to identify in the response based on information associated with existing wireless links in addition to the locations of the existing wireless links. For example, in some implementations in which the database 612 stores transmission power information associated with existing wireless links, the channel selection module 606 can be configured to select one or more frequency channels to include in the response based on the transmission power information. Additionally, in some implementations in which the database 612 stores the transmission directions associated with existing wireless links, the channel selection module 606 can be configured to select one or more frequency channels to include in the response based on the transmission directions. For example, the channel selection module 606 can select one or more channels on which it determines that potential interference from existing wireless links is suitable (for example, below a threshold value). Similarly, the channel selection module 606 can select one or more channels on which it determines that potential interference to existing wireless links is suitable (for example, below a threshold value). In some other implementations, the channel selection module 606 can select multiple frequency channels to identify in the response and leave it to the wireless communication device 500 to select a particular one of the frequency channels identified in the response based on transmission power or direction information further included in the response.

In some implementations in which the request received from the wireless communication device 500 further includes transmission power capabilities of the wireless communication device 500, the channel selection module 606 can be configured to select one or more frequency channels to identify in the response based on power considerations including the transmission power capabilities of the wireless communication device 500 as compared to transmission power characteristics of various existing wireless links in the vicinity of the wireless communication device 500.

Additionally or alternatively, in some implementations in which the request received from the wireless communication device 500 further includes spectral mask information associated with transmissions from the wireless communication device 500, the channel selection module 606 can be configured to select one or more frequency channels to identify in the response based on a spectral mask associated with transmissions from the transmitter of the wireless communication device 500.

In some implementations, the channel selection module 606 is further configured to generate or maintain a model associated with the existing wireless links and use the model to determine protected regions (for example, including geographic regions in which frequency channels in the band of interest are not usable by APs such as the wireless communication device 500 and their associated STAs). For example, the channel selection module 606 can use the model in combination with the known location of the wireless communication device 500 to identify what frequency channels are available to the device. In some such implementations, the channel selection module 606 can build or maintain the model using various sub-models. For example, the channel selection module 606 can make use of a pathloss sub-model, a building attenuation sub-model, a polarization mismatch sub-model, a clutter loss sub-model, and a sub-model of transmitter and receive antenna patterns. In some such implementations, the channel selection module 606 can build or maintain the model based on information, stored in the database 612, relating to characteristics of the transmissions over such existing wireless links. For example, the channel selection module 606 can maintain the model using identifications of various existing wireless links (such as point-to-point microwave links and fixed satellite uplinks, among other incumbent systems), the locations of such existing wireless links (for example, in the form of longitudinal and latitudinal coordinates), and information related to the antennas associated with the existing wireless links (for example, transmission power information, the transmission directions, antenna models, antenna heights, antenna tilts, antenna polarizations, beam widths, antenna gains, among other antenna information). In some implementations, the information related to the characteristics of the transmissions over the wireless links can additionally include rate and modulation information.

In various implementations, the channel selection module 606 also can identify or select various frequency channels for use by the wireless communication device 500 based on frequency channels being used by other wireless communication devices for unlicensed operation. In some implementations, the model described above can be augmented with, or used in combination with, a model of the wireless communication devices, including APs and their associated STAs, including their locations and transmission characteristics. In this manner, the channel selection module 606 can select and distribute channels for use by multiple wireless communication device 500 throughout the frequency band so as to spread potential interference throughout the band to reduce or minimize the likelihood of interference to any one wireless communication device 500 or to any one existing incumbent wireless link.

Additionally or alternatively, the channel selection module 606 can select only those channels to include in the response that have not been blacklisted from use by the wireless communication device 500 based on the identification information associated with the wireless communication device. As described above, the identifications of such blacklisted frequency channels can be linked to respective ones of the unique IDs stored in the database 612 and retrieved from the database by the channel selection module 606 responsive to requests received from wireless communication devices associated with the unique IDs.

The one or more processors of the database system 600 can execute the authentication and security module 608 to manage authentication with APs, such as AP 105, AP 300 and wireless communication device 500 described with reference to Figures 1, 3 and 5, respectively, and to enable secure communication of data to and from the APs.

The one or more processors of the database system 600 can execute the database integration module 610 to integrate information associated with new and existing wireless links into the database 612. As described above, the information stored in the database 612 can include identifications of various existing wireless links, such as point-to-point microwave links and fixed satellite uplinks, among other incumbent systems in any frequency band of interest. As also described above, one frequency band of interest in which incumbent systems may operate is the 6 GHz band, which, in some implementations, or by some definitions, may extend from about 5925 MHz to about 7250 MHz. In various implementations, the database integration module 610 is configured to store the locations of such existing wireless links in the database 612 (for example, in the form of longitudinal and latitudinal coordinates). In some implementations, the database integration module 610 is further configured to store other information relating to characteristics of the transmissions over such existing wireless links in the database 612. For example, the database integration module 610 can be configured to store transmission power information associated with existing wireless links, or the transmission directions associated with existing wireless links, in the database 612.

In some implementations, the database integration module 610 is additionally or alternatively configured to store the unique IDs of some or all of the wireless communication devices known to the database system 600 and to link the unique IDs to those blacklisted frequency channels the respective wireless communication devices are not permitted to use. For example, the database integration module 610 may receive information from existing wireless link operators that specifies the particular frequency channels to be blacklisted from use by particular wireless communication devices identified by their unique IDs. For example, a licensed wireless link operator may identify interference from or otherwise detect wireless transmissions to or from a particular wireless communication device such as the wireless communication device 500. The wireless link operator may then communicate a request to the database system 600 that identifies the unique ID of the wireless communication device as determined, for example, by demodulating and decoding at least a portion of a packet communication to or from the wireless communication device. The request from the wireless link operator also can include the identifications of the frequency channel or channels to be blacklisted from use by the wireless communication device (for example, those frequency channels on which interference was detected). The database integration module 610 can be configured to store and link the unique ID and the identified blacklisted frequency channels in the database 612.

It should also be appreciated that, in some implementations or instances, the AP communication module 604 can be configured to receive location information or unique IDs from respective wireless communication devices on a periodic or other basis in messages from such devices that do not include explicit requests for frequency channels on which they are permitted or not permitted to operate. In some such implementations, messages containing such location information or unique IDs also can include the frequency channels on which the respective wireless communication devices are operating. Such information can then be stored by the database integration module 610 into the database 612. In some such implementations, the channel selection module 606 can be configured to detect when a wireless communication device has moved within a threshold boundary of an existing wireless link based on the received location information and to generate a message it then communicates to the wireless communication device that instructs the wireless communication device to use another designated frequency channel or to select from a plurality of other channels identified in the message. In some other such implementations, the channel selection module 606 can be configured to detect when a message containing a particular unique ID and a particular frequency channel of operation match a corresponding pair of unique ID and blacklisted frequency channel in the database 612, and to generate a message it then communicates to the wireless communication device that instructs the wireless communication device to use another designated non-blacklisted frequency channel or to select from a plurality of other non-blacklisted channels identified in the message. These implementations would be examples of "push-type" implementations as compared to the "pull-type" implementations described in more detail above.

The database 612 may be stored with each of the modules 604, 606, 608 and 610 in one or more memory devices. In some other implementations, the database 612 is stored in or implemented by another memory or memory device logically or physically separate from the memory used to store each of the modules 604, 606, 608 and 610. In some implementations, the database 612 stores profile information for various wireless communication devices. For example, the database 612 can store profile information for each AP it receives requests from. The profile information can include for each AP, for example, the AP's MAC address, IP address, FCC ID, supported data rates, a number of capabilities and any other suitable information.

The database 612 also stores identifications of various existing wireless links, such as point-to-point microwave links and fixed satellite uplinks, among other incumbent systems. In various implementations, the database 612 stores the locations of such existing wireless links (for example, in the form of longitudinal and latitudinal coordinates). In some implementations, the database 612 is further configured to store other information relating to characteristics of the transmissions over such existing wireless links, for example, such as information related to the antennas associated with the existing wireless links. For example, such antenna information can include transmission power information, the transmission directions, antenna models, antenna heights, antenna tilts, antenna polarizations, beam widths, antenna gains, among other antenna information. In some implementations, the information related to the characteristics of the transmissions over the wireless links can additionally include rate and modulation information. In some implementations, the database 612 can additionally include information related to the license associated with each existing wireless link, for example, such as a licensing authority or license expiration date. All of such information can be retrieved by the channel selection module 606 and used in selecting one or more frequency channels to identity in a response to an AP such as the wireless communication device 500.

Additionally or alternatively, the local database 612 can additionally or alternatively store the unique IDs of some or all of the wireless communication devices known to the database system 600 and to link the unique IDs to those blacklisted frequency channels the respective wireless communication devices are not permitted to use.

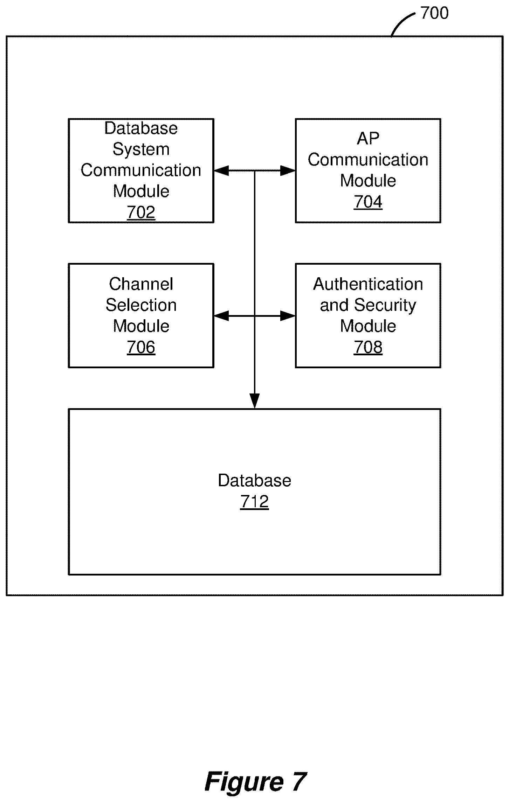

Figure 7 shows a block diagram of an example network controller 700 according to some implementations. In some implementations, the network controller 700 includes a database system communication module 702, an AP communication module 704, a channel selection module 706, an authentication and security module 708, and a database 712. The operations and functions of the network controller 700 will hereinafter be described for didactic purposes with reference to the wireless communication device 500 described with reference to Figure 5 and the database system described with reference to Figure 6.

In some implementations, each of the modules 702, 704, 706 and 708 are implemented at least in part as software stored in a memory of the network controller 700. For example, each of the modules 702, 704, 706 and 708 can be implemented as non-transitory instructions (or "code") executable by a processor (or multiple processors that may be operating in parallel). For example, one or more processors of the network controller 700 can execute the database system communication module 702 to manage wired or wireless communications with an external database system such as, for example, the external database system 600 described with reference to Figure 6. For example, the database system communication module 702 can be configured to generate requests to be transmitted to the external database system or to pass requests received from APs, such as the wireless communication device 500, to the external database system.

In some implementations, the database system communication module 702 is configured to generate or pass a request (such as that received from a wireless communication device 500 by the AP communication module 704 as described below) to identify one or more frequency channels for use in wireless communication, and to cause a transmitter of the network controller 700 to transmit the request to the external database system (for example, via one or more wired or wireless networks such as a wired or cellular backhaul). In some implementations, the request includes the location of an AP or AP-enabled STA such as, for example, the wireless communication device 500 (as determined or approximated by the location determination module 502 of the wireless communication device 500).

In some other implementations or instances, the request may not include a location of the associated wireless communication device, such as when the wireless communication device does not possess geolocation capabilities or when geolocation capabilities are otherwise unavailable (for example, in indoor environments or particular external locations where SNS or other location signals are blocked or otherwise not available). In some such implementations, the request can include identification information associated with the wireless communication device. In some such implementations, the identification information includes a unique ID associated with the wireless communication device such as, for example, a FCC ID, MAC address or some other reference, identification or information that may uniquely identify the wireless communication device. In some implementations, the request also can include an IP address associated with the wireless communication device 500.

In some implementations, the request can additionally include one or more of: a transmission power capability of the transmitter of the wireless communication device 500, a spectral mask associated with transmissions from the transmitter of the wireless communication device 500, capabilities for performing preamble puncturing (a feature in 802.11ax), or other information that may be useful to the external database system in identifying one or more frequency channels for use by the wireless communication device 500 as described in more detail below.

In some implementations, the database system communication module 702 is configured to generate requests for the external database system on a periodic basis, for example, in implementations in which the locations of the APs the network controller 700 manages are maintained in the database 712. Additionally or alternatively, the database system communication module 702 can be configured to generate a second request for the external database system responsive to receiving a first request from an AP, such as the wireless communication device 500 (as described with reference to the AP communication module 704 below). In some other implementations, the database system communication module 702 can be configured to pass (with minimal processing) requests received from APs (as described with reference to the AP communication module 704 below) to the external database system 600.

The database system communication module 702 also is configured to receive responses from the external database system 600 to the requests generated or passed from the network controller 700. For example, the database system communication module 702 can be configured to receive a response from the external database system 600 that includes information identifying one or more frequency channels. In some implementations, the identified frequency channels are in a frequency band that supports both licensed and unlicensed wireless communication such as, for example, the 6 GHz band. In some implementations, the identified frequency channels are channels on which existing wireless systems in a geographic vicinity of the wireless communication device 500 do not operate (or are not operating at a particular time).

In some implementations, the response received from the external database system 600 identifies a single selected frequency channel only, or a single set of selected frequency channels (for example, a set of adjacent channels) that the wireless communication device 500 can bond together for larger bandwidth communications. In some other implementations, the response received from the external database system 600 can identify multiple frequency channels, a range of multiple frequency channels, or multiple sets of multiple (for example, adjacent) frequency channels. In some other implementations, the response received from the external database system 600 identifies one or more blacklisted frequency channels the wireless communication device 500 is not permitted to use.

In some implementations, the response received from the external database system further includes a maximum transmission power for the wireless communication device 500 to use when transmitting communications on one or more of the identified frequency channels. Additionally or alternatively, in some implementations, the response received from the external database system further includes timing information usable by the network controller 700 (and in particular the channel selection module 706) or the wireless communication device 500 (and in particular the channel selection module 506) to identify a time interval or duration during which one or more of the frequency channels identified in the response are available for use in wireless communications by the wireless communication device.

Additionally or alternatively, in some implementations, the response received from the external database system can further include information associated with one or more existing wireless links. For example, the response can include information identifying one or more existing wireless links operating on one or more of the frequency channels identified in the response. In some such implementations, the response can further include location information associated with (for example, geographic locations of) one or more of the existing wireless links (or the locations of the existing wireless links within a geographic boundary or "tile" around the wireless communication device 500). The response also can include other information associated with wireless transmissions from the existing wireless links including various characteristics of such transmissions, for example, and information related to the antennas associated with the existing wireless links (for example, transmission power information, the transmission directions, antenna models, antenna heights, antenna tilts, antenna polarizations, beam widths, antenna gains, among other antenna information).

In some other implementations, the response received from the external database system does not identify a list of suitable frequency channels from which the channel selection module 706 is to select. In such implementations, the response received from the external database system can include information associated with one or more existing wireless links such as the locations and transmission characteristics as described above. In such implementations, it is left to the channel selection module 706 to select one or more suitable frequency channels and corresponding transmission powers, among other parameters, based on the information associated with the existing wireless links identified in the response.

One or more processors of the network controller 700 can execute the AP communication module 604 to manage wired or wireless communications with APs such as, for example, the AP 105, the AP 300 or the wireless communication device 500 described with reference to Figures 1, 3 and 5, respectively. For example, the AP communication module 604 can be configured to receive requests from APs managed by the network controller 700 and to generate responses to be transmitted to the APs.

In some implementations, the AP communication module 704 is configured to receive a request from the wireless communication device 500 to identify one or more frequency channels for use in wireless communication. In some implementations, the request includes the geographic location of the wireless communication device 500, or otherwise includes location information that can be usable by the AP communication module 704 in determining a location of the wireless communication device 500.

In some other implementations or instances, the request may not include a geographic location of the wireless communication device 500, such as when the wireless communication device does not possess geolocation capabilities or when geolocation capabilities are otherwise unavailable (for example, in indoor environments or particular external locations where SNS or other location signals are blocked or otherwise not available). In some such implementations, the request includes identification information associated with the wireless communication device 500. In some such implementations, the identification information includes a unique ID associated with the wireless communication device 500 such as, for example, a FCC ID, MAC address or some other reference, identification or information that may uniquely identify the wireless communication device.

In some implementations, the request can additionally include one or more of: a transmission power capability of the wireless communication device 500, a spectral mask associated with transmissions from the wireless communication device 500, capabilities for performing preamble puncturing, or other information that may be useful to the database system 600 (and particularly the channel selection module 606) in identifying one or more frequency channels for use by the wireless communication device 500 as described in more detail below.

The AP communication module 704 also is configured to generate responses to requests from external APs, such as the wireless communication device 500, and to cause the responses to be transmitted to the APs (for example, via one or more wired or wireless networks). For example, the AP communication module 704 can be configured to generate a response that includes information identifying one or more frequency channels determined by the network controller 700 (and particularly the channel selection module 706) to be suitable for use in wireless communications by the wireless communication device 500. In some implementations, the frequency channels identified in the response are in a frequency band that supports both licensed and unlicensed wireless communication such as, for example, the 6 GHz band. In some implementations, the frequency channels identified in the response are channels on which the network controller 700 has determined that existing wireless systems in a geographic vicinity of the wireless communication device 500 do not operate (or are not operating at a particular time).

In some implementations, the AP communication module 704 generates a response that identifies a single selected frequency channel only, or a single set of selected frequency channels (for example, a set of adjacent channels) that the wireless communication device 500 can bond together for larger bandwidth communications. In some other implementations, the AP communication module 704 generates a response that identifies multiple frequency channels, a range of multiple frequency channels, or multiple sets of multiple (for example, adjacent) frequency channels. In such other implementations, the channel selection module 506 can select one of the multiple frequency channels identified in the response. In some other implementations, the AP communication module 704 generates a response that instead identifies one or more blacklisted frequency channels the wireless communication device 500 is not permitted to use.

In some implementations, the AP communication module 704 generates the response to further include a maximum transmission power for the wireless communication device 500 to use when transmitting communications on one or more of the identified frequency channels. Additionally or alternatively, in some implementations, the AP communication module 704 generates the response to further include timing information usable by the wireless communication device 500 to identify a time interval or duration during which one or more of the frequency channels identified in the response are available for use in wireless communications by the wireless communication device 500.

In some implementations, the AP communication module 704 generates the response to further include information associated with one or more existing wireless links. For example, the response can include information identifying one or more existing wireless links operating on one or more of the frequency channels identified in the response. In some such implementations, the response can further include location information associated with (for example, geographic locations of) one or more of the existing wireless links (or the locations of the existing wireless links within a geographic boundary or "tile" around the wireless communication device 500). In some such implementations, the response can further include transmission power information associated with the one or more of the existing wireless links. The response also can include other information associated with wireless transmissions from the existing wireless links including various characteristics of such transmissions (for example, directions of transmission or spectral masks, among others as described above).

One or more processors of the database system 700 can execute the channel selection module 706 to select one or more frequency channels to identity in the response to the wireless communication device 500. In various implementations, the channel selection module 706 selects the frequency channels to identify in the response based on the geographic location of the wireless communication device 500 as determined from the location information received in the initial request from the wireless communication device 500. Additionally or alternatively, the channel selection module 706 can select the frequency channels to identify in the response based on a list of blacklisted frequency channels associated with the wireless communication device 500. For example, the channel selection module 706 can identify the non-blacklisted frequency channels available for use by the wireless communication device 500 and then select one or more of the non-blacklisted frequency channels to transmit to the wireless communication device for use or selection by the wireless communication device. As described above, the identifications of the blacklisted channels (or conversely the identifications of the non-blacklisted channels) can be received in a response from the external database system 600 to a request from the database system communication module 702 (that identified the particular unique ID associated with the wireless communication device 500).

In some implementations, the channel selection module 706 selects a single frequency channel that the wireless communication device 500 is to use for wireless communications in the frequency band. In some other implementations, the channel selection module 706 can select multiple frequency channels to identify in the response and leave it to the wireless communication device 500 to select a particular one of the frequency channels identified in the response as described above. The channel selection module 706 can base the selection of which frequency channels to identify in the response based on various rules.

As described above, in some implementations, the channel selection module 706 selects only those channels on which existing wireless systems in a geographic vicinity of the wireless communication device 500 do not operate (or are not currently operating) to include in the response. The channel selection module 706 can be configured to determine such channels based on the location of the wireless communication device 500 (as determined from the location information included in the request) as well as on the locations of existing wireless links as determined and received by the external database system 600. The locations of such existing wireless links, as well as information relating to characteristics of the transmissions over such existing wireless links, can be stored in and retrieved from the database 712 by the channel selection module 706.

In some implementations, the channel selection module 706 can be configured to select multiple frequency channels to identify in the response based on information associated with existing wireless links in addition to the locations of the existing wireless links. For example, in some implementations in which the database 712 stores transmission power information associated with existing wireless links, the channel selection module 706 can be configured to select one or more frequency channels to include in the response based on the transmission power information. Additionally, in some implementations in which the database 712 stores the transmission directions associated with existing wireless links, the channel selection module 706 can be configured to select one or more frequency channels to include in the response based on the transmission directions. For example, the channel selection module 706 can select one or more channels on which it determines that potential interference from existing wireless links is suitable (for example, below a threshold value). Similarly, the channel selection module 706 can select one or more channels on which it determines that potential interference to existing wireless links is suitable (for example, below a threshold value). In some other implementations, the channel selection module 706 can select multiple frequency channels to identify in the response and leave it to the wireless communication device 500 to select a particular one of the frequency channels identified in the response based on transmission power or direction information further included in the response.

In some implementations in which the initial request received from the wireless communication device 500 further includes transmission power capabilities of the wireless communication device 500, the channel selection module 706 can be configured to select one or more frequency channels to identify in the response based on power considerations including the transmission power capabilities of the wireless communication device 500 as compared to transmission power characteristics of various existing wireless links in the vicinity of the wireless communication device 500.

Additionally or alternatively, in some implementations in which the request received from the wireless communication device 500 further includes spectral mask information associated with transmissions from the wireless communication device 500, the channel selection module 706 can be configured to select one or more frequency channels to identify in the response based on a spectral mask associated with transmissions from the transmitter of the wireless communication device 500.

In some implementations, the channel selection module 706 is further configured to generate or maintain a model associated with the existing wireless links and use the model to determine protected regions (for example, including geographic regions in which frequency channels in the band of interest are not usable by APs such as the wireless communication device 500 and their associated STAs). For example, the channel selection module 706 can use the model in combination with the known location of the wireless communication device 500 to identify what frequency channels are available. In some such implementations, the channel selection module 706 can build or maintain the model using various sub-models. For example, the channel selection module 706 can make use of a pathloss sub-model, a building attenuation sub-model, a polarization mismatch sub-model, a clutter loss sub-model, and a sub-model of transmitter and receive antenna patterns. In some such implementations, the channel selection module 706 can build or maintain the model based on information, stored in the database 712, relating to characteristics of the transmissions over such existing wireless links. For example, the channel selection module 706 can maintain the model using identifications of various existing wireless links (such as point-to-point microwave links and fixed satellite uplinks, among other incumbent systems), the locations of such existing wireless links (for example, in the form of longitudinal and latitudinal coordinates), and information related to the antennas associated with the existing wireless links (for example, transmission power information, the transmission directions, antenna models, antenna heights, antenna tilts, antenna polarizations, beam widths, antenna gains, among other antenna information). In some implementations, the information related to the characteristics of the transmissions over the wireless links can additionally include rate and modulation information.

In various implementations, the channel selection module 706 also can identify or select various frequency channels for use by the wireless communication device 500 based on frequency channels being used by other wireless communication devices for unlicensed operation such as the APs managed by the network controller 700. In some implementations, the model described above can be augmented with, or used in combination with, a model of the wireless communication devices managed by the network controller 700, including APs and their associated STAs, including their locations and transmission characteristics. In this manner, the channel selection module 706 can select and distribute channels for use by multiple wireless communication devices 500 managed by the network controller 700 throughout the frequency band so as to spread potential interference throughout the band to reduce or minimize the likelihood of interference to any one wireless communication device 500 or to any one existing incumbent wireless link.

The one or more processors of the network controller 700 can execute the authentication and security module 708 to manage authentication with APs, such as AP 105, AP 300 and wireless communication device 500 described with reference to Figures 1, 3 and 5, respectively, to manage authentication with the external database system, such as the external database system 600, and to enable secure communication of data to and from the APs and external database system. The database 712 may be stored with each of the modules 702, 704, 706 and 708 in one or more memory devices. In some other implementations, the database 712 is stored in or implemented by another memory or memory device logically or physically separate from the memory used to store each of the modules 702, 704, 706 and 708. In some implementations, the database 712 stores profile information for various wireless communication devices. For example, the database 712 can store profile information for each AP it receives requests from. The profile information can include for each AP, for example, the AP's MAC address, IP address, FCC ID, supported data rates, a number of capabilities and any other suitable information.

The database 712 also can store identifications of various existing wireless links, such as point-to-point microwave links and fixed satellite uplinks, among other incumbent systems as determined from, for example, responses received from the external database system 600. In various implementations, the database 712 stores the locations of such existing wireless links (for example, in the form of longitudinal and latitudinal coordinates). In some implementations, the database 712 is further configured to store other information relating to characteristics of the transmissions over such existing wireless links, for example, such as information related to the antennas associated with the existing wireless links. For example, such antenna information can include transmission power information, the transmission directions, antenna models, antenna heights, antenna tilts, antenna polarizations, beam widths, antenna gains, among other antenna information. In some implementations, the information related to the characteristics of the transmissions over the wireless links can additionally include rate and modulation information. In some implementations, the database 712 can additionally include information related to the license associated with each existing wireless link, for example, such as a licensing authority or license expiration date. All of such information can be retrieved by the channel selection module 706 and used in selecting one or more frequency channels to identity in a response to an AP such as the wireless communication device 500.

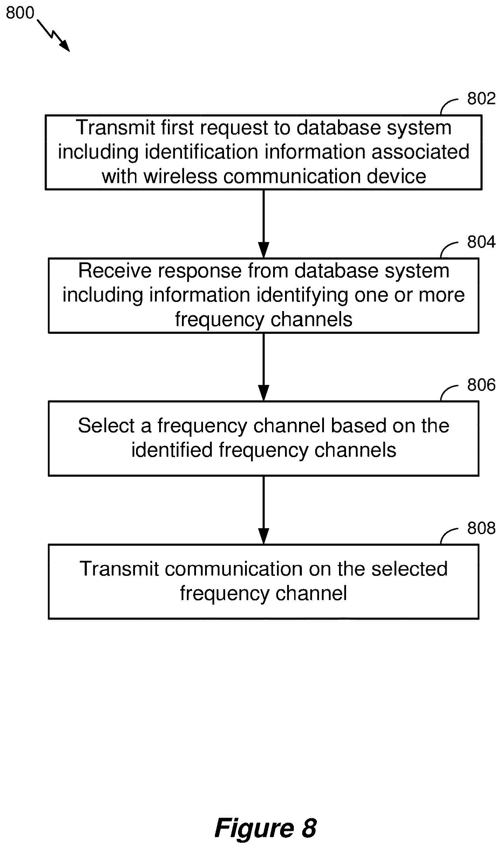

Figure 8 shows a flowchart illustrating an example process 800 for selecting a frequency channel for use in wireless communications according to some implementations. In some implementations, the selected frequency channel is for use in unlicensed wireless communication in a frequency band that supports both licensed and unlicensed wireless communication. In some implementations, the process 800 is performed by an AP such as the wireless communication device 500 described with reference to Figure 5 (and will hereinafter be described with reference to the wireless communication device 500). For example, the process 800 can be implemented by a hard AP (such as the AP 105 or AP 300 described with reference to Figures 1 and 3, respectively). In some other instances, the process 800 can be implemented by a soft AP, such as an AP-enabled STA (such as the STA 115 or STA 400 described with reference to Figures 1 and 4, respectively).

In some implementations, the process 800 begins in block 802 with transmitting a first request to a database system (such as the database system 600 described with reference to Figure 6), the first request including identification information associated with the wireless communication device. In some implementations, the identification information includes location information associated with a geographic location of the wireless communication device. Additionally or alternatively, in some implementations the identification information includes a unique ID associated with the wireless communication device such as, for example, a FCC ID, a MAC address or some other reference, identification or information that may uniquely identify the wireless communication device.

In some implementations, the process 800 proceeds in block 804 with receiving a first response from the database system, the first response including information identifying one or more frequency channels. In some implementations, the one or more identified frequency channels include available frequency channels from which the wireless communication device may select. Additionally or alternatively, in some implementations the one or more identified frequency channels include blacklisted frequency channels the wireless communication device is not permitted to operate on. In some implementations, the process 800 proceeds in block 806 with selecting a frequency channel based on the identified frequency channels. In some implementations, the process 800 proceeds in block 808 with transmitting a communication on the selected frequency channel.

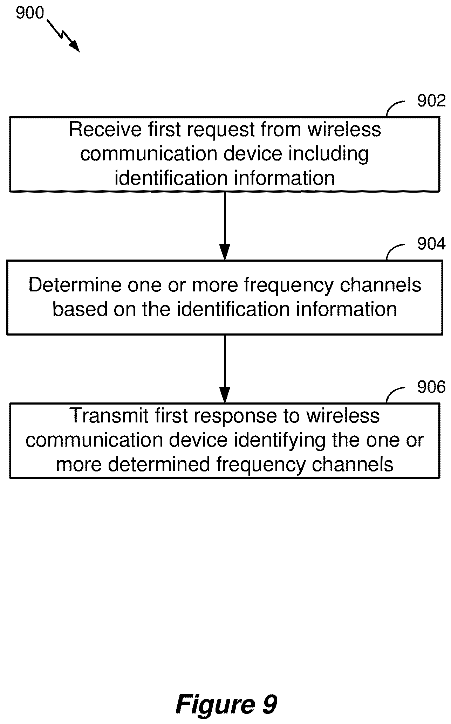

Figure 9 shows a flowchart illustrating an example process 900 for identifying one or more frequency channels for use in wireless communications based on identification information according to some implementations. In some implementations, the identified frequency channels may be used for unlicensed wireless communication in a frequency band that supports both licensed and unlicensed wireless communication. In some implementations, the process 900 is performed by an external database system (such as the database system 600 described with reference to Figure 6).

In some implementations, the process 900 begins in block 902 with receiving a first request from a wireless communication device (such as the wireless communication device 500 described with reference to Figure 5), the first request including identification information associated with the wireless communication device. In some implementations, the identification information includes location information associated with a geographic location of the wireless communication device. Additionally or alternatively, in some implementations the identification information includes a unique ID associated with the wireless communication device such as, for example, a FCC ID, MAC address or some other reference, identification or information that may uniquely identify the wireless communication device. In some implementations, the process 900 proceeds in block 904 with determining one or more frequency channels based on the identification information.

In some implementations, the process 900 proceeds in block 906 with transmitting a first response to the wireless communication device identifying the one or more determined frequency channels. In some implementations, the one or more identified frequency channels include available frequency channels from which the wireless communication device may select (such as frequency channels that may be desirable based on location or transmission power information). Additionally or alternatively, in some implementations the one or more identified frequency channels include blacklisted frequency channels the wireless communication device is not permitted to operate on (enabling the wireless communication device to determine non-blacklisted channels by process of elimination).

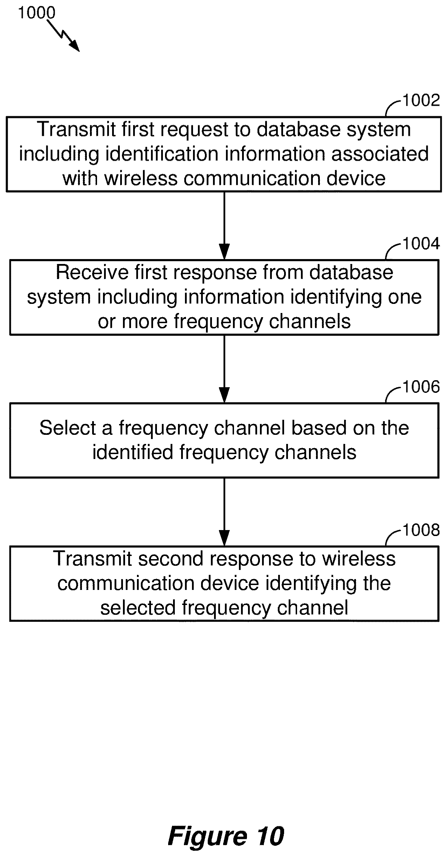

Figure 10 shows a flowchart illustrating an example process 1000 for selecting and identifying one or more frequency channels for use in wireless communications based on identification information according to some implementations. In some implementations, the selected frequency channel is for use in unlicensed wireless communication in a frequency band that supports both licensed and unlicensed wireless communication. In some implementations, the process 1000 is performed by a network controller configured to manage multiple wireless communication devices (such as the network controller 700 described with reference to Figure 7).

In some implementations, the process 1000 begins in block 1002 with transmitting a first request to a database system (such as the database system 600 described with reference to Figure 6), the first request including identification information associated with a wireless communication device managed by the network controller (such as the wireless communication device described with reference to Figure 5). In some implementations, the identification information includes location information associated with a geographic location of the wireless communication device. Additionally or alternatively, in some implementations the identification information includes a unique ID associated with the wireless communication device such as, for example, a FCC ID, MAC address or some other reference, identification or information that may uniquely identify the wireless communication device.

In some implementations, the process 1000 proceeds in block 1004 with receiving a first response from a database system, the first response including information identifying one or more frequency channels. In some implementations, the one or more identified frequency channels include available frequency channels from which the wireless communication device may select. Additionally or alternatively, in some implementations the one or more identified frequency channels include blacklisted frequency channels the wireless communication device is not permitted to operate on. In some implementations, the process 1000 proceeds in block 1006 with selecting a frequency channel for use by the wireless communication device based on the identified frequency channels. As described above, the network controller may select the frequency channel based on numerous factors such as location or transmission characteristics associated with the wireless communication device or one or more existing wireless links. In some implementations, the process 1000 proceeds in block 1008 with transmitting a communication (a second response) to the wireless communication device identifying the selected frequency channel.

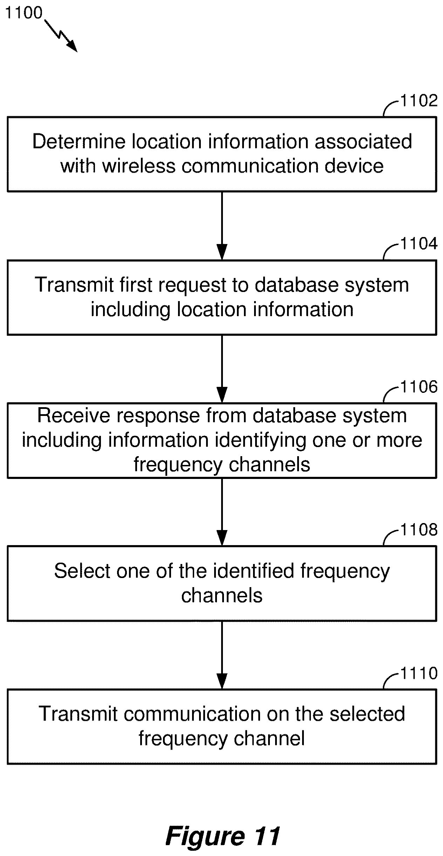

Figure 11 shows a flowchart illustrating an example process 1100 for selecting a frequency channel for use in wireless communications according to some implementations. In some implementations, the selected frequency channel is for use in unlicensed wireless communication in a frequency band that supports both licensed and unlicensed wireless communication. In some implementations, the process 1100 is performed by an AP such as the wireless communication device 500 described with reference to Figure 5 (and will hereinafter be described with reference to the wireless communication device 500). For example, the process 1100 can be implemented by a hard AP (such as the AP 105 or AP 300 described with reference to Figures 1 and 3, respectively). In some other instances, the process 1100 can be implemented by a soft AP, such as an AP-enabled STA (such as the STA 115 or STA 400 described with reference to Figures 1 and 4, respectively).

In some implementations, the process 1100 begins in block 1102 with determining location information associated with the wireless communication device. In some implementations, the process 1100 proceeds in block 1104 with transmitting a first request to a database system (such as the database system 600 described with reference to Figure 6), the first request including the location information. In some implementations, the process 1100 proceeds in block 1106 with receiving a first response from the database system, the first response including information identifying one or more frequency channels. In some implementations, the process 1100 proceeds in block 1108 with selecting a one of the identified frequency channels. In some implementations, the process 1100 proceeds in block 1110 with transmitting a communication on the selected frequency channel.

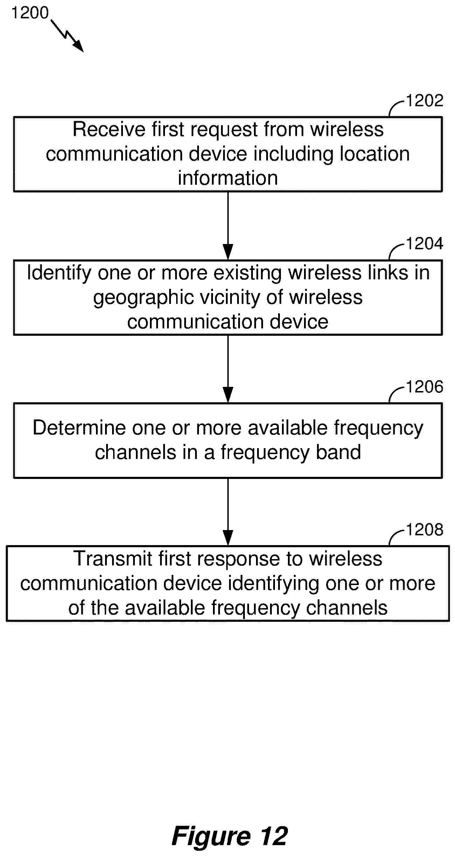

Figure 12 shows a flowchart illustrating an example process 1200 for identifying one or more frequency channels for use in wireless communications based on location information according to some implementations. In some implementations, the identified frequency channels may be used for unlicensed wireless communication in a frequency band that supports both licensed and unlicensed wireless communication. In some implementations, the process 1200 is performed by an external database system (such as the database system 600 described with reference to Figure 6).

In some implementations, the process 1200 begins in block 1202 with receiving a first request from a wireless communication device (such as the wireless communication device 500 described with reference to Figure 5), the first request including location information associated with the wireless communication device. In some implementations, the process 1200 proceeds in block 1204 with identifying one or more existing wireless links in a geographic vicinity of the wireless communication device based on the received location information. In some implementations, the process 1200 proceeds in block 1206 with determining one or more available frequency channels based on the identification. In some implementations, the process 1200 proceeds in block 1208 with transmitting a first response to the wireless communication device identifying one or more of the available frequency channels.

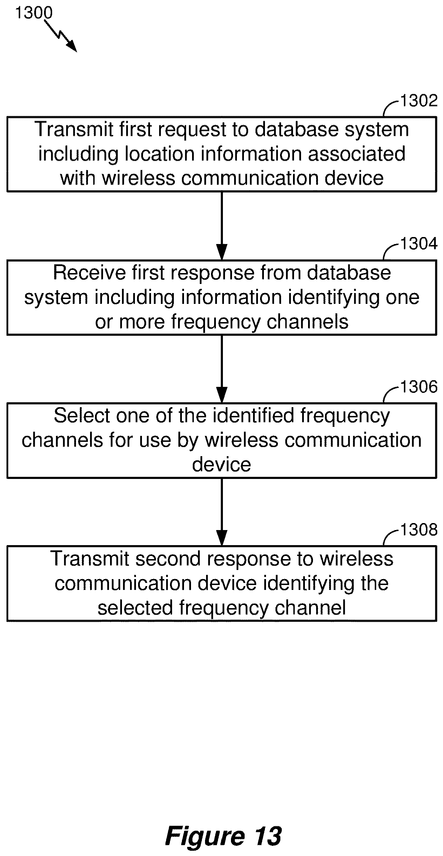

Figure 13 shows a flowchart illustrating an example process 1300 for selecting and identifying one or more frequency channels for use in wireless communications based on location information according to some implementations. In some implementations, the selected frequency channel is for use in unlicensed wireless communication in a frequency band that supports both licensed and unlicensed wireless communication. In some implementations, the process 1300 is performed by a network controller configured to manage multiple wireless communication devices (such as the network controller 700 described with reference to Figure 7).

In some implementations, the process 1300 begins in block 1302 with transmitting a first request to a database system (such as the database system 600 described with reference to Figure 6), the first request including location information associated with the network controller or any wireless communication devices (for example, APs) managed by the network controller. In some implementations, the process 1300 proceeds in block 1304 with receiving a first response from the database system, the first response including information identifying one or more frequency channels. In some implementations, the process 1300 proceeds in block 1306 with selecting a first one of the identified one or more frequency channels for use by at least a first one of the wireless communication devices managed by the network controller. In some implementations, the process 1300 proceeds in block 1308 with transmitting a communication (a second response) to the first wireless communication device identifying the selected frequency channel.

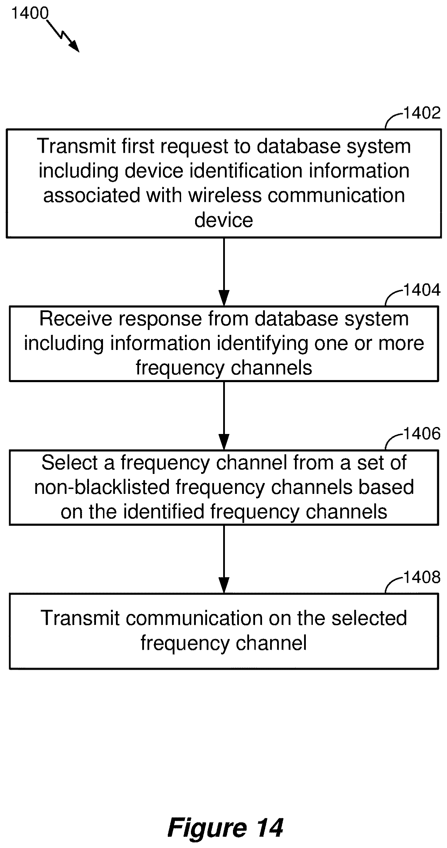

Figure 14 shows a flowchart illustrating an example process 1400 for selecting a frequency channel for use in wireless communications according to some implementations. In some implementations, the selected frequency channel is for use in unlicensed wireless communication in a frequency band that supports both licensed and unlicensed wireless communication. In some implementations, the process 1400 is performed by an AP such as the wireless communication device 500 described with reference to Figure 5 (and will hereinafter be described with reference to the wireless communication device 500). For example, the process 1400 can be implemented by a hard AP (such as the AP 105 or AP 300 described with reference to Figures 1 and 3, respectively). In some other instances, the process 1400 can be implemented by a soft AP, such as an AP-enabled STA (such as the STA 115 or STA 400 described with reference to Figures 1 and 4, respectively).

In some implementations, the process 1400 begins in block 1402 with transmitting a first request to a database system (such as the database system 600 described with reference to Figure 6), the first request including device identification information associated with the wireless communication device. In some such implementations, the device identification information includes a unique ID associated with the wireless communication device such as, for example, a FCC ID, a MAC address or some other reference, identification or information that may uniquely identify the wireless communication device.

In some implementations, the process 1400 proceeds in block 1404 with receiving a first response from the database system, the first response including information identifying one or more frequency channels. In some implementations, the one or more identified frequency channels include blacklisted frequency channels the wireless communication device is not permitted to operate on (enabling the wireless communication device to determine the non-blacklisted channels by process of elimination). Additionally or alternatively, in some implementations the one or more identified frequency channels include non-blacklisted frequency channels the wireless communication device is permitted to select to operate on (such as including frequency channels that may be desirable based on location or transmission power information). In some such implementations, the first response may specify which of the identified frequency channels are blacklisted and which are not blacklisted. In some implementations, the process 1400 proceeds in block 1406 with selecting a one of the non-blacklisted frequency channels. In some implementations, the process 1400 proceeds in block 1410 with transmitting a communication on the selected frequency channel.

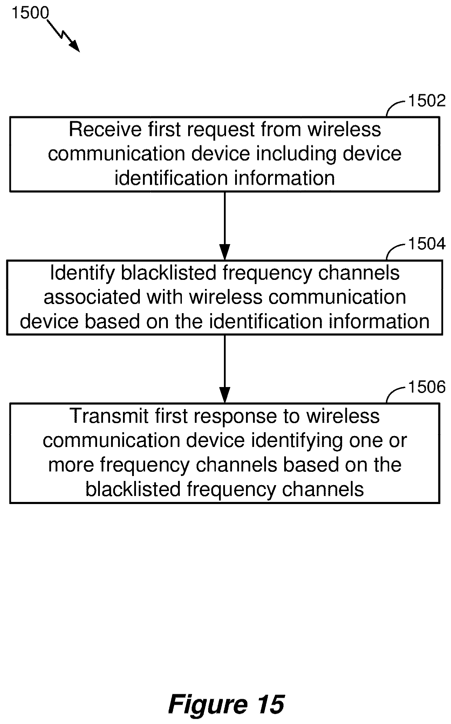

Figure 15 shows a flowchart illustrating an example process 1500 for identifying one or more frequency channels for use in wireless communications based on device identification information according to some implementations. In some implementations, the identified frequency channels may be used for unlicensed wireless communication in a frequency band that supports both licensed and unlicensed wireless communication. In some implementations, the process 1500 is performed by an external database system (such as the database system 600 described with reference to Figure 6).

In some implementations, the process 1500 begins in block 1502 with receiving a first request from a wireless communication device (such as the wireless communication device 500 described with reference to Figure 5), the first request including device identification information associated with the wireless communication device. In some such implementations, the device identification information includes a unique ID associated with the wireless communication device such as, for example, a FCC ID, MAC address or some other reference, identification or information that may uniquely identify the wireless communication device. In some implementations, the process 1500 proceeds in block 1504 with identifying any blacklisted frequency channels associated with the wireless communication device based on the device identification information.

In some implementations, the process 1500 proceeds in block 1506 with transmitting a first response to the wireless communication device identifying one or more frequency channels. In some implementations, the one or more identified frequency channels include the blacklisted frequency channels the wireless communication device is not permitted to operate on (enabling the wireless communication device to determine non-blacklisted channels by process of elimination). Additionally or alternatively, in some implementations the one or more identified frequency channels include non-blacklisted frequency channels the wireless communication device is permitted to select to operate on (such as including frequency channels that may be desirable based on location or transmission power information). In some such implementations, the first response may specify which of the identified frequency channels are blacklisted or which are not blacklisted.

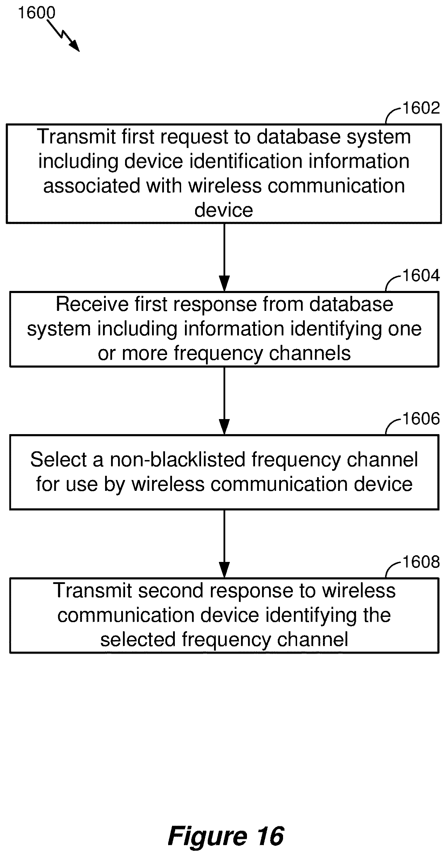

Figure 16 shows a flowchart illustrating an example process 1600 for selecting and identifying one or more frequency channels for use in wireless communications based on identification information according to some implementations. In some implementations, the selected frequency channel is for use in unlicensed wireless communication in a frequency band that supports both licensed and unlicensed wireless communication. In some implementations, the process 1600 is performed by a network controller configured to manage multiple wireless communication devices (such as the network controller 700 described with reference to Figure 7).

In some implementations, the process 1600 begins in block 1602 with transmitting a first request to a database system (such as the database system 600 described with reference to Figure 6), the first request including device identification information associated with a wireless communication device managed by the network controller (such as the wireless communication device described with reference to Figure 5). In some such implementations, the device identification information includes a unique ID associated with the wireless communication device such as, for example, a FCC ID, a MAC address or some other reference, identification or information that may uniquely identify the wireless communication device.

In some implementations, the process 1600 proceeds in block 1604 with receiving a first response from the database system, the first response including information identifying one or more frequency channels. In some implementations, the one or more identified frequency channels include blacklisted frequency channels the wireless communication device is not permitted to operate on (enabling the network controller to determine non-blacklisted channels by process of elimination). Additionally or alternatively, in some implementations the one or more identified frequency channels include non-blacklisted frequency channels the wireless communication device is permitted to select to operate on (such as including frequency channels that may be desirable based on location or transmission power information). In some such implementations, the first response may specify which of the identified frequency channels are blacklisted or which are not blacklisted.

In some implementations, the process 1600 proceeds in block 1606 with selecting one or more of the non-blacklisted frequency channels for use by the wireless communication device. As described above, the network controller may select the non-blacklisted frequency channels based on numerous factors such as location or transmission characteristics associated with the wireless communication device or one or more existing wireless links. In some implementations, the process 1600 proceeds in block 1608 with transmitting a communication (a second response) to the wireless communication device identifying the one or more selected frequency channels.

As used herein, a phrase referring to "at least one of" or "one or more of' a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

The various illustrative components, logic, logical blocks, modules, circuits, operations and algorithm processes described in connection with the implementations disclosed herein may be implemented as electronic hardware, firmware, software, or combinations of hardware, firmware or software, including the structures disclosed in this specification and the structural equivalents thereof. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

The hardware and data processing apparatus used to implement the various illustrative components, logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, or, any conventional processor, controller, microcontroller, or state machine. A processor also may be implemented as a combination of computing devices, for example, a combination of a DSP and a microprocessor, a plurality of microprocessors, one or more microprocessors in conjunction with a DSP core, or any other such configuration. In some implementations, particular processes, operations and methods may be performed by circuitry that is specific to a given function.

As described above, in some aspects implementations of the subject matter described in this specification can be implemented as software. For example, various functions of components disclosed herein or various blocks or steps of a method, operation, process or algorithm disclosed herein can be implemented as one or more modules of one or more computer programs. Such computer programs can include non-transitory processor- or computer-executable instructions encoded on one or more tangible processor- or computer-readable storage media for execution by, or to control the operation of, data processing apparatus including the components of the devices described herein. By way of example, and not limitation, such storage media may include RAM, ROM, EEPROM, CD-ROM or other optical disk storage, magnetic disk storage or other magnetic storage devices, or any other medium that may be used to store program code in the form of instructions or data structures. Combinations of the above should also be included within the scope of storage media.

Various modifications to the implementations described in this disclosure may be readily apparent to persons having ordinary skill in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein.

Additionally, various features that are described in this specification in the context of separate implementations also can be implemented in combination in a single implementation. Conversely, various features that are described in the context of a single implementation also can be implemented in multiple implementations separately or in any suitable subcombination. As such, although features may be described above as acting in particular combinations, and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

## Claims

1. A method for unlicensed wireless communication in a frequency band that supports both licensed and unlicensed wireless communication, the method comprising:
transmitting a request to a database system, the request including identification information associated with a wireless communication device;
receiving a response from the database system, the response including information identifying one or more frequency channels in the frequency band; selecting a frequency channel for use by the wireless communication device based on the identified frequency channels; and
transmitting a communication to the wireless communication device identifying the selected frequency channel.

2. The method of claim 1, wherein the identification information includes location information associated with a geographic location of the wireless communication device.

3. The method of any of claims 1 and 2, wherein the identification information includes a unique ID associated with the wireless communication device.

4. The method of any of claims 1 to 3, wherein the one or more identified frequency channels include available frequency channels from which the wireless communication device can select.

5. The method of any of claims 1 to 4, wherein the one or more identified frequency channels include blacklisted frequency channels the wireless communication device is not permitted to operate on.

6. The method of any of claims 1 to 5, wherein selecting the frequency channel is based on location and/or transmission characteristics associated with the wireless communication device or one or more existing wireless links.

7. A method for unlicensed wireless communication in a frequency band that supports both licensed and unlicensed wireless communication, the method comprising:
receiving a request, the request including identification information associated with a wireless communication device;
determining one or more available frequency channels in the frequency band; and
transmitting a response, the response including information identifying the one or more determined frequency channels.

8. The method of claim 7, further comprising:
receiving location information in the request, the location information being associated with a geographic location of the wireless communication device; and identifying one or more existing links in a geographic vicinity of the wireless communication device based on the location information.

9. The method of any of claims 7 and 8, wherein the method further comprises:
identifying blacklisted frequency channels associated with the wireless communication device.

10. The method of claim 9, wherein the response comprises:
the identified blacklisted frequency channels the wireless communication device is not permitted to operate on.

11. The method of claim 9, wherein the one or more identified frequency channels include blacklisted frequency channels the wireless communication device is not permitted to operate on.

12. An apparatus for unlicensed wireless communication in a frequency band that supports both licensed and unlicensed wireless communication, the apparatus comprising:
means for transmitting a request to a database system, the request including identification information associated with a wireless communication device; means for receiving a response from the database system, the response including information identifying one or more frequency channels in the frequency band; means for selecting a frequency channel for use by the wireless communication device based on the identified frequency channels; and
means for transmitting a communication to the wireless communication device identifying the selected frequency channel.

13. The apparatus of claim 12, further comprising means for performing a method according to any of claims 2 to 6.

14. An apparatus for unlicensed wireless communication in a frequency band that supports both licensed and unlicensed wireless communication, the apparatus comprising:
information associated with a wireless communication device;
means for determining one or more available frequency channels in the frequency band; and
means for transmitting a response, the response including information identifying the one or more determined frequency channels.

15. The apparatus of claim 14, further comprising means for performing a method according to any of claims 8 to 11.
